# EUROPÄISCHE PATENTSCHRIFT

(11) **EP 1 385 072 B1**
(45) Veröffentlichungstag und Bekanntmachung des Hinweises auf die Patenterteilung: **25.03.2009**
(21) Anmeldenummer: 03016361.2
(22) Anmeldetag: 18.07.2003
(51) Int. Cl.: G05D 23/02, F24D 17/00

(54) **Regulierventil**
Control valve
Soupape de réglage

(30) Priorität: 18.07.2002 DE 10232549; 24.03.2003 DE 10313278
(43) Veröffentlichungstag der Anmeldung: 28.01.2004
(73) Patentinhaber: Gebr. Kemper GmbH + Co. KG Metallwerke, 57462 Olpe (DE)
(72) Erfinder: Fries, Stefan, 57462 Olpe (DE)
(74) Vertreter: Grünecker, Kinkeldey, Stockmair & Schwanhäusser Anwaltssozietät

(56) Entgegenhaltungen:
- DE-A1- 2 936 027
- DE-A1- 3 309 532
- DE-A1- 10 056 715
- DE-A1- 19 755 036
- DE-C1- 19 834 151

## Beschreibung

Die vorliegende Erfindung betrifft ein Regulierventil für Wasserzirkulationssysteme nach dem Oberbegriff von Anspruch 1. Ein derartiges Regulierventil ist beispielsweise aus der DE 100 56 715 bekannt.

In Wasserversorgungsanlagen mit großen Leitungslängen zwischen Warmwasserbereitungsgerät und Zapfstellen, beispielsweise in mehrstöckigen Gebäuden, wird parallel zu den einzelnen Steigleitungen eine Zirkulationsleitung verlegt, wobei die Zirkulationsleitung einerseits mit der Steigleitung und andererseits mit dem Warmwasserbereiter verbunden ist. Dadurch lässt sich eine Zirkulation des Warmwassers über den größten Teil der Versorgungsleitung erzielen, so dass bei der Entnahme von Warmwasser aus der Warmwasserversorgungsanlage nur noch verhältnismäßig kleine Wassermengen ungenutzt durchlaufen müssen, bis das entnommene Wasser die gewünschte Temperatur aufweist.

Die nutzbare Wassertemperatur in Warmwasserversorgungsnetzen liegt bevorzugt in einem Bereich von ca. 50°C, was einerseits für Anwendungszwecke wie Spülen, Waschen, Duschen völlig ausreichend ist und zum anderen den Forderungen der Energiesparverordnung Rechnung trägt. Weiterhin ist bei dieser Wassertemperatur in der Warmwasserversorgung ein Verbrühschutz an den Auslaufarmaturen überflüssig, da Temperaturen von 50°C noch keine ernsthaften Verletzungen begründen.

Allerdings stellen diese Warmwasserversorgungsanlagen Infektionsquellen für die sogenannte Legionärskrankheit dar, die insbesondere immungeschwächte ältere Menschen gefährdet. Die Legionellen, Erreger der Legionärskrankheit, vermehren sich stark bei Temperaturen zwischen 35 und 50°C. Die Sterilisation der Bakterien beginnt bei etwa 60°C. Die Vermehrung und das Überleben der Legionellen werden auch durch Stagnation des warmen Trinkwassers durch die Anwesenheit von schlammigen Oberflächenbelägen begünstigt.

Besonders stark wirkt sich dieses Problem in weit verzweigten Warmwasseranlagen aus, wie sie beispielsweise in Hotels, Krankenhäusern, Altenheimen, Schwimmbädern und ähnlichen Gebäuden existieren, wo immer wieder Wasserleitungen bzw. Leitungsteile bestehen, die über eine längere Zeitdauer nicht benutzt werden oder in denen keine Zirkulation stattfindet, so dass diese Leitungen bzw. Leitungsteile stehendes Wasser mit einer kritischen Temperatur enthalten.

Um den Gefährdungen, die insbesondere für die vorerwähnten Risikogruppen bestehen, durch Legionellen in Warmwasser zu begegnen, wird das warme Wasser mit Trinkwasserqualität in besonders gefährdeten Warmwasser-Zirkulationsnetzen, z.B. in Krankenhäusern, Altenheimen usw. auf über 50°C gehalten und kann bei Verkeimung des Trinkwassersystems in Einzelfällen oder periodisch auf 70°C bis 75°C aufgeheizt werden, um eine thermische Desinfektion durchzuführen.

Zur Durchführung eines hydraulischen Abgleichs werden in Warmwasser-Zirkulationssystemen thermostatisch regelnde Ventile der gattungsgemäßen Art, wie sie beispielsweise aus der DE 298 05 921.5 U1, der DE 198 47 151 C1 sowie der EP 1 167 841 A2 bekannt sind, eingesetzt, um den Wasser-Volumenstrom mit der gewünschten Zirkulationstemperatur gleichmäßig auf die einzelnen Zirkulationsstränge des Warmwasser-Zirkulationssystems zu verteilen. Derartige Regulierventile werden üblicherweise in jeder Steigstrang-TWZ-Leitung (TWZ = Trinkwasser Zirkulation), und zwar kurz vor deren Einmündung in die Zirkulationssammelleitung, eingebaut. Die Regulierventile stellen das hydraulische Gleichgewicht der Zirkulationsstränge untereinander her, d.h., der Drucküberschuss der Zirkulationspumpe wird gleichmäßig durch die Regulierventile, die eine Drosselfunktion ausüben, abgebaut. Dabei stellen die Regulierventile in den zirkulationspumpennahen Rohrsträngen große Differenzdrücke bei kleinen Volumenströmen und in den hydraulisch ungünstigen, pumpenfernen Rohrsträngen kleine Drücke bei großen Volumenströmen ein. Auf diese Weise werden die Vorgaben der DVGW-Arbeitsblätter W551, W552 und W553 weitgehend befolgt, dass alle Warmwasserleitungen innerhalb des Systems gleichmäßig mit hochtemperiertem Trinkwasser von 55 bis 60°C durchströmt werden, so dass ein vermehrtes Wachstum von Keimen (Legionellen) in den Wasserleitungen unterbunden wird, und alle Wasserleitungen des Leitungsnetzes durch heißes Trinkwasser mit einer Temperatur über 70°C thermisch desinfiziert werden können.

Die DE 29 36 027 offenbart ein Thermostatventil mit einem Ventilkegel, der von einem Thermostatelement gesteuert wird und mit einem Ventilsitz zusammenwirkt. Der Ventilkegel trägt an einem vorderen Ende einen in den Ventilsitz eingreifenden Regulierzapfen. Der Ventilkegel ist in Umfangsrichtung von einer kranzförmigen Schirmwand umgeben, die durch ein Einstellungsteil ausgeformt wird, welches Teil des Ventileinsatzes ist und dort im Gewindeeingriff gehalten ist. Die Schirmwand wirkt mit einer radial die Schirmwand umgebenden Ringwand zusammen, die an dem dem Ventilsitz gegenüberliegenden Teil des Ventilgehäuses vorgesehen ist. Die Schirmwand weist an ihrem vorderen Ende auf dem Umfang verteilt vorgesehene Öffnungen auf. Durch axiale Verstellung des Einstellteils kann die axiale Überdeckung zwischen der Stirnwand und der Ringwand verändert und die wirksame Durchtrittsfläche der Öffnungen verändert werden. Durch diese Ausgestaltung kann die Drosselfunktion des Thermostatventils nach der DE 29 36 027 verändert werden. Die Stellung des Thermostaten wirkt allerdings allein auf den Ventilkegel, der zum Verschluss des Thermostatventils gegen den Ventilsitz angelegt werden kann oder aber zwischen dem Regulierzapfen und dem Ventilsitz einen vorgegebenen Ringspalt freilässt, durch den eine von dem Thermostat vorgegebene Strömung ermöglicht wird.

Aus der DE 100 56 715 ist ein Ventil für Warmwasseranlagen mit einem Gehäuse bekannt, welches einen Strömungseinlass im Anschluss an eine Speiseleitung und einen Strömungsauslass zum Anschluss an eine Abgabeleitung aufweist. Ferner hat das vorbekannte Ventil eine Aufnahme, in die ein Ventileinsatz eingesetzt ist, der einen von einem Thermoelement gestellten Regulierkolben aufweist. Der Ventileinsatz ist bei dem vorbekannten Ventil in Bezug auf das Ventilgehäuse zur Einstellung einer Voreinstellung verstellbar. Der Ventileinsatz weist einen topfförmigen Endbereich auf, in dem ein durch die Stellbewegung des Thermoelementes auf einen gehäuseseitigen Ventilsitz hülsenartiges Verschlussstück gleitverschieblich aufgenommen ist. Das hülsenartige Verschlussstück ist über einen Verbindungsstößel mit einem Stößel des Thermoelementes verbunden.

Zur Regulierung der Warmwasseranlage wird das hülsenartige Verschlussstück durch die Stellbewegung des Thermoelementes relativ zu dem gehäuseseitigen Ventilsitz verschoben. Dabei befindet sich das Verschlussstück bei einer voreingestellten Warmwassertemperatur zur Erzeugung eines maximalen Volumenstromes außerhalb des Ventilsitzes. In das Ventil eingeleitetes Wasser erfährt dementsprechend nahezu keine Drosselung und fließt im Wesentlichen ohne substantiellen Druckverlust durch das Regulierventil hindurch. Steigt die Warmwassertemperatur an, so wird das hülsenartige Verschlussstück durch die Stellbewegung des Thermoelementes in Richtung auf den Ventilsitz verschoben, bis die Außenumfangsfläche des Vetschlussstücks bei einer vorbestimmten Betriebstemperatur in die von dem Ventilsitz umgebene Durchlassöffnung eintritt. Bei dieser Stellung des Ventils wird ein minimaler Volumenstrom einreguliert. Es ergeben sich jeweils zwei Teilvolumenströme, die sich zu dem minimalen Volumenstrom des Ventils (Gesamtvolumenstrom) aufaddieren. Der eine Teilvolumenstrom fließt zwischen der Außenumfangsfläche des hülsenförmigen Verschlussstücks und der Innenumfangsfläche des Ventilsitzes. Der andere Volumenstrom fließt mittig durch das hülsenartige Verschlussstück in den topfförmigen Endbereich und von dort durch einen Ringspalt, welcher zwischen der Außenumfangfläche des hülsenartigen Verschlussstücks und einem endseitig des topfförmigen Endbereiches ausgebildeten Vorsprunges gebildet ist, in den Auslasskanal.

Bei fortschreitender Erhöhung der tatsächlichen Warmwassertemperatur wird das Verschlussstück weiter in Richtung auf den Ventilsitz vorgeschoben, bis der den zweiten Teilstrom beschränkende Ringspalt auf Grund der Relativbewegung des Verschlussstückes gegenüber dem topfförmigen Endbereich des Ventileinsatzes vergrößert wird. Bei einem Ausführungsbeispiel schiebt sich beispielsweise das ventileinsatzseitige Ende des Verschlussstückes an dem Vorsprung vorbei und gibt einen relativ großen Durchlass frei, durch welchen der durch das hülsenartige Verschlussstück hindurchfließende zweite Teilvolumenstrom mit geringer Drosselung zu dem Strömungsauslass des Regulierventils gelangen kann. Diese Stellung des Ventils wird beispielsweise bei einer Temperatur oberhalb von 70 Grad Celsius zur Durchführung einer thermischen Desinfektion der Warmwasseranlage eingestellt.

Das aus der DE 100 56 715 bekannte Ventil ist relativ aufwendig im Aufbau. Zum anderen bringt das vorbekannte Ventil den Nachteil mit sich, dass in dem topfförmigen Endbereich des Ventileinsatzes ein Totraum entstehen kann. Weiterhin ist es zur Einhaltung vorbestimmter maximaler und minimaler Volumenströme erforderlich, einerseits den Ventileinsatz und andererseits das den Ventilsitz aufweisende Ventilgehäuse mit hoher Genauigkeit und abgestimmt aufeinander herzustellen. Weiterhin besteht das Problem, dass der Volumenstrom des Ventils auch bei einem minimalen Volumenstrom bei vorbestimmter Betriebstemperatur durch die zwei Teilströme gebildet wird. Dementsprechend ist es erforderlich, zwischen dem Verschlussstück und dem Ventilsitz einerseits sowie dem Verschlussstück und dem Vorsprung des topfartigen Endbereiches andererseits hohe Toleranzen einzuhalten, um einen möglichst geringen minimalen Volumenstrom des Ventils zu gewährleisten. Der relativ aufwendige Aufbau des vorbekannten Gehäuses wird darüber hinaus dadurch erforderlich, dass das Ventil zur Durchführung einer thermischen Desinfektion geeignet sein muss, d.h. nach Erreichen einer vorbestimmten Betriebstemperatur zunächst einen minimalen Volumenstrom einregelt, dieser Volumenstrom jedoch bei ansteigender Temperatur nicht konstant bleibt, sondern bei Erreichen der Desinfektionstemperatur die Drosselung des Ventiles abnehmen soll, um eine thermische Desinfektion mit verhältnismäßig hohen Volumenströmen zu ermöglichen.

Die Praxis hat gezeigt, dass in weitverzweigten Warmwasserzirkulationssystemen in Hotels, Krankenhäusern, Altenheimen und ähnlichen mehrstöckigen Gebäuden die Zirkulation des warmen Wassers bis zu den einzelnen Zapfstellen in den verschiedenen Stockwerken der Gebäude gewährleistet werden muss. Ein hydraulischer Abgleich an den einzelnen Zapfstellen bzw. Nasszellen eines jeden Stockwerks kann mit den heute bekannten Ventilen nicht durchgeführt werden. Vielmehr erfordert ein wirkungsvoller hydraulischer Abgleich jeder einzelnen Zapfstelle bzw. Nasszelle ein vollkommen neuartiges Ventil.

Der vorliegenden Erfindung liegt das Problem zugrunde, ein Regulierventil für ein Warmwasserzirkulationssystem anzugeben, welches eine optimale Zirkulation des Warmwassers bis zu den einzelnen Zapfstellen ermöglicht und sich durch einfache Konstruktion bei hoher Regelgenauigkeit auch bei dauerhaftem Einsatz des Regelventils auszeichnet.

Dieses Problem wird erfindungsgemäß gelöst durch ein Regulierventil mit den Merkmalen von Anspruch 1.

Bei dem erfindungsgemäßen Regulierventil ist der Ventileinsatz zusammen mit einem die Regulieröffnung umgebenden Ventilsitzring als einheitliches Bauteil ausgebildet. Der Ventilsitzring ist gegenüber dem Gehäuse vorzugsweise durch eine an der Außenumfangsfläche des Ventilsitzesringes angebrachte Dichtung umfänglich abgedichtet. Die Regulieröffnung des Ventileinsatzes sowie die Führung des Regulierkolbens in dem Ventileinsatz können in derselben Werkzeugmaschine an dem Halbzeug für den Ventileinsatz ausgebildet werden. Bei der Bearbeitung des Ventilgehäuses auftretende Toleranzen wirken sich nicht auf die Regelgenauigkeit des Regulierventils aus.

Ferner bietet das erfindungsgemäße Regulierventil den Vorteil, dass der Volumenstrom des Ventils, d.h. der Gesamtvolumenstrom allein durch eine Veränderung des Spaltes zwischen dem Außenumfang des Regulierzapfens und dem Innenumfang der Durchflussöffnung reguliert wird. Der in die Durchflussöffnung eingreifende Regulierzapfen weist keine hülsenartige Struktur auf, d.h. erlaubt lediglich einen Volumenstrom außerhalb der Außenumfangfläche und nicht durch den Regulierkörper. Die zur Realisierung relativ kleiner minimaler Volumenströme einzuhaltenden Toleranzen können daher größer sein als bei dem aus der DE 100 56 715 vorbekannten Ventil.

Schließlich weist das erfindungsgemäße Ventil eine gegenüber dem vorbekannten Ventil vollkommen neue Reguliercharakteristik auf. So wird zwar in Übereinstimmung mit dem Stand der Technik unterhalb einer vorbestimmten Warmwassertemperatur ein maximaler konstanter Volumenstrom einreguliert. Bei Erreichen einer vorbestimmten Betriebstemperatur wird jedoch ein minimaler Volumenstrom einreguliert, der vorzugsweise auch bei einem weiteren Anstieg der Wassertemperatur bis zu einer maximal denkbaren Wassertemperatur in der Warmwasseranlage von bis zu 90 Grad Celsius konstant bleiben kann. Denn das erfindungsgemäße Regulierventil dient dem hydraulischen Abgleich an einzelnen Zapfstellen bzw. Nasszellen eines einzelnen Stockwerkes, was bedeutet, dass sich der an den Strömungsauslass anschließende Rohrleitungsbereich eine verhältnismäßig geringe Länge von wenigen Metern hat, bis dieser Rohrleitungsbereich an eine zentrale Stockwerk-Zirkulationssammelleitung angeschlossen ist, in der das zirkulierende Warmwasser gesammelt und gegebenenfalls über mehrere Stockwerke überbrückende Steigleitungen an einen zentralen Warmwasserbereiter der Warmwasseranlage zurückgeführt wird.

Es wird davon ausgegangen, dass der der einzelnen Zapfstelle bzw. einer einzelnen Nasszelle innerhalb eines Stockwerkes zugeordnete Rohrleitungsbereich zu keiner erheblichen Abkühlung des durchströmenden Warmwassers führt, so dass eine thermische Desinfektion auch bei einem minimalen Volumenstrom durchgeführt werden kann. Mithin ist es nicht erforderlich, an dem Ventil eine besondere Formgestaltung vorzusehen, die zu einer Erhöhung des Volumenstromes oberhalb der vorbestimmten Betriebstemperatur und unter Bedingungen, bei denen eine thermische Desinfektion durchgeführt werden kann, führt. Dementsprechend lässt sich das erfindungsgemäße Regulierventil konstruktiv wesentlich einfacher ausgestalten, als beispielsweise das aus der DE 100 56 715 bekannte Ventil.

Gemäß einer bevorzugten Weiterbildung hat das erfindungsgemäße Regulierventil einen vorderen Zapfenabschnitt und einen im Durchmesser gegenüber diesem vergrößerten hinteren Zapfenabschnitt. Beide Zapfenabschnitte sind vorzugsweise zylindrisch ausgebildet und der vordere Zapfenabschnitt ist vorzugsweise bei der Regulierung des maximalen Volumenstromes in der Durchflussöffnung befindlich. Diese Ausgestaltung ist im Hinblick auf eine exakte Regulierung des Volumenstromes, insbesondere des minimalen Volumenstromes, zu bevorzugen. Die Ausgestaltung erlaubt einen relativ großen Durchmesser der Regulieröffnung, so dass zur Einhaltung relativ kleiner Toleranzen verhältnismäßig große absolute Toleranzwerte berücksichtigt werden müssen. Auch bei der Regelung des maximalen Volumenstromes wird der den Volumenstrom des Ventils vorgebende Strömungsquerschnitt durch den in der Durchflussöffnung befindlichen vorderen Zapfenabschnitt vermindert und durch entsprechende Ausgestaltung des vorderen Zapfenabschnittes kann der maximale Volumenstrom auf den gewünschten Wert eingestellt werden.

Im Hinblick auf eine Drosselung auf einen konstanten Wert für den minimalen Volumenstrom ist es weiterhin zu bevorzugen, zwischen dem vorderen und dem hinteren Zapfenabschnitt einen Ringansatz auszubilden, der zur Regulierung des minimalen Volumenstromes in der Durchflussöffnung befindlich ist. Dieser Ringansatz weist vorzugsweise radial nach außen spitz zulaufende Flankenflächen auf, die spitz in einem Durchmesser zusammenlaufen, der etwas kleiner als der Innendurchmesser einer zylindrischen Regulieröffnung ist. Bei einer alternativen Ausgestaltung kann an der Regulieröffnung ein konisch zulaufender Kragen vorgesehen sein, der eine Kragenöffnung freilässt, die ein wenig größer als der Durchmesser des Außendurchmessers des hinteren Zapfens ist. Bei beiden Ausgestaltungen wird ein Ringspalt zur Regulierung des minimalen Volumenstromes geschaffen, der im wesentlichen keine axiale Erstreckung hat, sondern nach Art einer strömungstechnischen Blende ausgebildet ist.

Im Hinblick auf die Regulierung einzelner Zapfstellen bzw. Nasszellen in einem Stockwerk hat es sich als vorteilhaft herausgestellt, den minimalen Volumenstrom mit weniger als 0,08 Kubikmeter pro Stunde, vorzugsweise mit weniger als 0,05 Kubikmeter pro Stunde auszulegen. Bei einer derartigen bevorzugten Ausgestaltung des Regulierventiles ist es möglich, eine größere Anzahl von auf einem Stockwerk befindlichen Zapfstellen bzw. Nasszellen über einen gemeinsamen TWW-Strang (Trinkwasser warm) mit Warmwasser zu versorgen und das zirkulierende Warmwasser über eine gemeinsame Zirkulationssammelleitung zum Steigstrang TWZ zurückzuführen Der sehr geringe minimale Volumenstrom gemäß der bevorzugten Weiterbildung der vorliegenden Erfindung verhindert dabei einen Kurzschluss des in dem Stockwerk zirkuliernden Warmwassers. Mit anderen Worten erreicht das Warmwasser auf Grund der geringen minimalen Volumenströme auch die in Strömungsrichtung der TWW-Leitung letzte Nasszelle bzw. Zapfstelle.

Zur Lösung des vorerwähnten Problems wird gemäß einem nebengeordneten Aspekt der vorliegenden Erfindung vorgeschlagen, an dem Regulierzapfen ein in die Durchlassöffnung einbringbares Reinigungselement vorzusehen. Das Reinigungselement des erfindungsgemäßen Regulierventils tritt bei geeigneter Betätigung des Regulierzapfens, beispielsweise beim vollständigen Verschließen der Durchlassöffnung durch manuelles Zustellen des Regulierzapfens auf die Durchlassöffnung in dieselbe ein und wird dort zur Einwirkung mit zumindest einem Wandungsabschnitt der Durchlassöffnung gebracht. Hierdurch werden eventuell an der Durchlassöffnung anhaltende Verunreinigungen entfernt. Dementsprechend wird mit dem nebengeordneten Aspekt des erfindungsgemäßen Lösungsvorschlages sichergestellt, dass der bei der Auslegung des Regulierventils ermittelte wirksame Durchlass insbesondere für den minimalen Volumenstrom dem talsächlich zur Verfügung stehenden Durchlass im Bereich der Durchlassöffnung entspricht. Eine unerwünschte Verengung, gegebenenfalls eine Verstopfung im Bereich der Durchlassöffnung durch anhaftende Verunreinigung wird beim regelmäßigen Einbringen des Reinigungselementes in die Durchlassöffnung verhindert.

Das Regulierventil mit dem Reinigungselement eignet sich insbesondere zum hydraulischen Abgleich bei einem sehr geringen minimalen Volumenstrom, d.h. beim Einsatz des Regulierventils in weit verzweigten Stockwerkszirkulationsleitungen im Stockwerkbereich zur optimalen Zirkulation des warmen Wassers bis zu einzelnen Zapfstellen einer Warmwasserversorgungsanlage und zum direkten hydraulischen Abgleich an den einzelnen Zapfstellen. Besonders wirkungsvoll lässt sich das Regulierventil mit dem Reinigungselement bei einer Ausgestalgung des Regulierzapfens nach Anspruch 2 verwirklichen. Bei dieser Ausgestaldung befindet sich das Reinigungselement vorzugsweise hinter dem hinteren Zapfenabschnitt, d.h. schließt ventileinsatzseitig an den hinteren Zapfenabschnitt an.

Vorteihalfte Weiterbildungen der Erfindung werden in den Unteransprüchen angegeben.

Die vorliegende Erfindung wird nachfolgend an Hand von Ausführungsbeispielen in Verbindung mit der Zeichnung näher erläutert. In dieser zeigen:
- Figur 1: Eine Längsschnittansicht eines Ausführungsbeispiels eines Stockwerkregulierventils,
- Figur 2: eine Längsschnittansicht eines weiteren Ausführungsbeispiels eines Stockwerkregulierventils,
- Figur 3: das Schema einer Wasserversorgungsanlage für ein mehrstöckiges Gebäude,
- Figur 4: eine schematische Grundrissdarstellung des in einem Stockwerk verlegten Leitungsnetzes der Warmwasserversorgungsanlage in sanitären Nasszellen mit verschiedenen Zapfstellen,
- Figur 5: eine schematische Darstellung einer Nasszelle mit sanitären Einrichtungen und den entsprechenden Zapfstellen mit einem Regulierventil als Unterputzarmatur;
- Figur 6: eine Längsschnittansicht eines dritten Ausführungsbeispiels des Stockwerkregulierventils,
- Figur 7: den Ausschnitt "B" gemäß Figur 6 in vergrößerter Darstellung,
- Figur 8: den Ausschnitt C gemäß Figur 6 wieder in vergrößerter Darstellung,
- Figur 9: den Ventileinsatz des in den Figuren 6-8 gezeigten Ausführungsbeispiels in vergrößerter Darstellung,
- Figur 10: den Ausschnitt "B" gemäß Figur 9 in vergrößerter Darstellung,
- Figur 11: den Ausschnitt C gemäß Figur 9 in vergrößerter Darstellung,
- Figur 12: eine Längsschnittansicht eines vierten Ausführungsbeispiels des Stockwerkregulierventils,
- Figur 13: den Ventilensatz des in Figur 12 dargestellten Ausführungsbeispiels in vergrößerter Darstellung bei einer Reguliereinstellung bei 57 Grad Celsius,
- Figur 14: den in Figur 13 gezeigten Ventileinsatz bei einer Regulierstellung größer als 57 Grad Celsius,
- Figur 15: der in den Figuren 13 und 14 dargestellte Reguliereinsatz im abgesperrten Zustand bei einer Temperatur von etwa 90 Grad Celsius,
- Figur 16: der in den Figuren 13-16 gezeigte Ventileinsatz im abgesperrten Zustand bei einer Temperatur von weniger als 50 Grad Celsius und
- Figur 17: der in den Figuren 13-15 gezeigte Ventileinsatz im abgesperrten Zustand bei einer Temperatur von 57 Grad Celsius und
- Figur 18: die Regelcharakteristik der in den Figuren 13-17 gezeigte Ventils.

Bei den nachfolgend beschriebenen Ausführungsbeispielen sind gleiche oder ähnliche Bauteile durch gleiche Bezugszeichen gekennzeichnet.

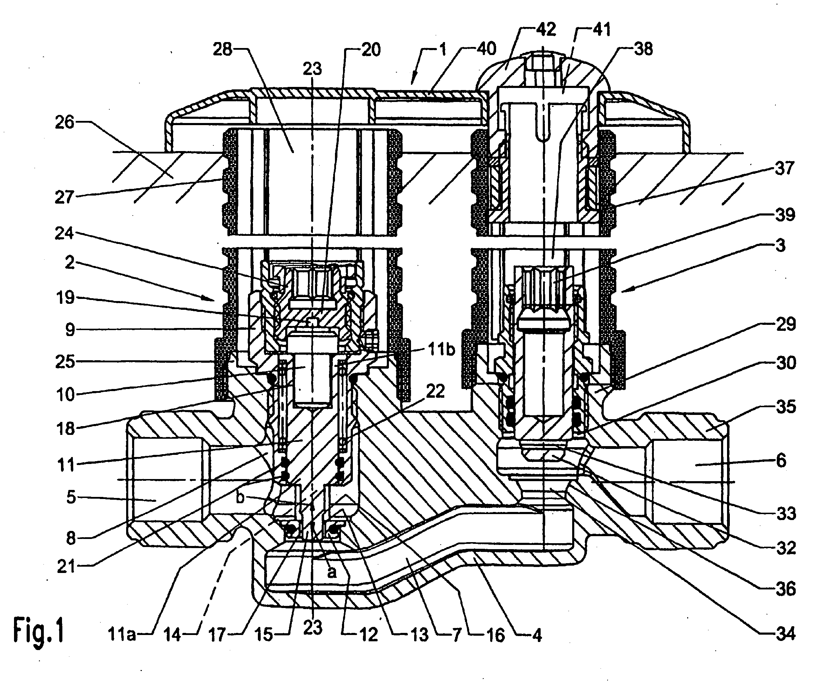

Das in Figur 1 gezeigte Ausführungsbeispiel eines Regulierventils für Warmwasser-Zirkulationssysteme in Form eines Stockwerkregulierventils umfasst ein durch die Warmwassertemperatur geregeltes, voreinstellbares Regulieroberteil 2 und ein diesem nachgeschaltetes, manuell betätigtes Sperr- und/oder Regulieroberteil 3, die in ein Ventilgehäuse z.B. aus Edelstahl oder Rotguss mit einem Einlasskanal 5 und einem Auslasskanal 6 eingebaut sind. Einlass- und Auslasskanal 5, 6 des Ventilgehäuses 4 sind durch einen Zwischenkanal 7 miteinander verbunden. Das als Geradsitzventil ausgebildete Regulieroberteil 2 weist einen Regulierkanal 8 auf, der den Eingangskanal 5 mit dem Zwischenkanal 7 des Ventilgehäuses 4 verbindet und einen Ventileinsatz 9 aufnimmt.

Der Ventileinsatz 9 ist mit einem Thermostatelement 10 zum Verstellen des Regulierkolbens 11 ausgestattet, der mit einem einteilig mit dem zylindrischen Ventileinsatz 9 ausgebildeten Ventilsitzring 12 zusammenwirkt, der an seiner äußeren Umfangsfläche durch eine Ringdichtung abgedichtet in dem Regulierkanal 8 gehalten ist und eine Durchlassöffnung 13 zwischen dem Regulierkanal 8 und den mit dem Ausgangskanal 6 des Ventilgehäuses 4 verbundenen Zwischenkanals 7 bildet. Der Regulierkolben 11 weist einen an seinem unteren Ende 11 a angeformten Regulierzapf 15 auf, der einen als Drossel wirkenden Ringansatz 16 besitzt und in die Durchlassöffnung 13 des Ventilsitzringes 12 eintaucht. Der Ringansatz 16 ist zwischen einem vorderen Zapfenabschnitt 15v und einem hinteren Zapfenabschnitt 15h angeordnet, welcher einen gegenüber dem vorderen Zapfenabschnitt 15v vergrößerten Durchmesser hat. Beide Zapfenabschnitte 15v, 15h sind mit zylindrischer Mantelfläche vorgesehen.

Der freie Strömungsquerschnitt der Durchlassöffnung 13 des durch Längsstege 14 in dem Ventileinsatz 9 gehaltenen Ventilsitzringes 12 ist durch die Position des durch den Ventilsitzring 12 unter Bildung eines Ringspaltes 17 verschiebbaren Regulierzapfens 15 des Regulierkolbens 11 regelbar. Der Regulierkolben 11 mit dem Regulierzapfen 15 ist durch die von der Wassertemperatur abhängige Stellhubbewegung des Thermoelementes 10 zwischen dem kᵥ-Maximalwert (maximaler Volumenstrom in m³/h bei 1 bar Druckverlust über dem Ventil) und dem kᵥ-Minimalwert (minimaler Volumenstrom in m³/h bei 1 bar Druckverlust über dem Ventil) bei einer in einem Temperaturbereich von beispielsweise 55 Grad Celsius bis 60 Grad Celsius liegenden Betriebstemperatur voreinstellbar.

Das Thermostatelement 10 ist in einen auf die Abmessungen desselben angepassten Aufnahmeschacht 18 in dem dem Ventilsitzring 12 abgewandten oberen Ende 11b des Regulierkolbens 11 eingesetzt und stützt sich mit einem aus- und einfahrbaren Stößel 19 gegen ein Widerlager 20 im Ventileinsatz 9 ab.

Der mittels Dichtringen 21 in dem Ventilensatz 9 abgedichtete Regulierkoben 11 ist mittels einer entgegen der Stellkraft des Thermostatelementes 10 wirkenden Rückstellfeder 22 in dem Ventileinsatz 9 in Richtung der Längsachse 23-23 des Ventilensatzes 9 verstellbar abgestützt, und das Widerlager 20 des durch die Wassertemperatur gesteuerten Thermostatelementes 10 ist zur Voreinstellung der Ausgangsstellung des Regulierkolbens 11, bei der in der Endstellung des Regulierkolbens 11 eine minimale Wassermenge durch das Regulieroberteil strömt, in Richtung der Längsachse 23-23 des Ventileinsatzes 9 entgegen der Federkraft der Rückstellfeder 22 des Regulierkolbens 11 verstellbar. Die Stellkraft des Thermostatelementes 10 ist größer als die Federkraft der Rückstellfeder 22 des Regulierkolbens 11.

Das zur Voreinstellung des Regulierkolbens 11 verstellbare Widerlager des Thermostatelementes 10 wird durch eine in dem Ventileinsatz 9 verschraubbare, z.B. als Innensechskantschraube ausgebildete Stellschraube 24 gebildet, die mit einem Steckschlüssel verschraubt wird. Die Stellschraube 24 zur Voreinstellung des Regulierkolbens 11 ist mit einer hör- und/oder fühlbaren Rastereinstellung zur Voreinstellung der Temperatur ausgestattet.

An das Ventilgehäuse 4 ist koaxial zur Längsachse 23-23 des Ventileinsatzes 9 ein Anschlussstutzen 25 zum Anschrauben eines über das Mauerwerk 26 vorstehenden Unterputzschachtes 27 mit einem Zugangskanal 28 zur Voreinstellung der Ausgangsstellung des in dem Ventilensatz 9 verstellbaren Regulierkolbens 11 für Wartungs- und Reparaturarbeiten und zur Ableitung des Wassers aus dem Mauerwerk 26 im Leckagefall angeformt.

An das Ventilgehäuse 4 ist ein weiterer Anschlussstutzen 29 mit einer Aufnahmeöffnung 30 für das in diese einschraubbare, manuell betätigte, als Geradsitzventil ausgebildete Absperr- und/oder Regulieroberteil 19 mit einem verstellbaren Regulierkegel 32 mit Dichtring 33 zum Absperren und/oder Regulieren der Durchflussöffnung 34 eines im Auslasskanal 6 des Anschlussstutzens 35 ausgebildeten Ventilsitzes 36 angeformt. Auf den Anschlussstutzen 29 für das Absperr- und/oder Regulieroberteil 3 ist ein über das Mauerwerk 26 vorstehender Unterputzschacht 37 mit einem Zugangskanal 38 zum Verstellen des z.B. mit einem Innensechskant 39 versehenen, verschraubbaren Regulierkegels 32 des Absperr- und/oder Regulieroberteils 3 mittels eines Steckschlüssels aufgeschraubt.

Die beiden Unterputzschäfte 27, 37 des in Figur 1 gezeigten Ausführungsbeispiels werden mit einer auf das Mauerwerk 26 aufsetzbaren Rosette 40 hygienisch einwandfrei verschlossen, die eine Öffnung 41 über dem Absperroberteil 3 zur Aufnahme eines Bediengriffs oder einer Behördenkappe 42 aufweist.

Ferner besteht die Möglichkeit, die Rosette 40 mit einer zusätzlichen Öffnung über dem Regulieroberteil 2 zur Aufnahme eines Bediengriffes oder einer Behördenkappe zu versehen.

Das in Figur 1 gezeigte Ausführungsbeispiel eines Stockwerkregulierventils arbeitet folgendermaßen:

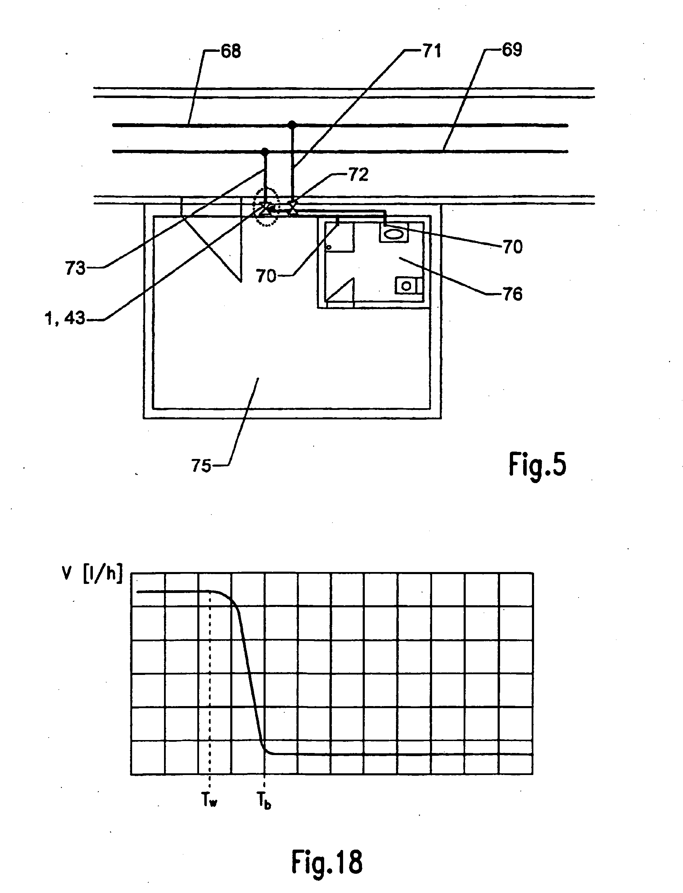

Bei einer Betriebstemperatur eines Warmwasser-Zirkulationssystems unterhalb einer vorbestimmten Warmwassertemperatur T_{w} (vgl. Figur 18), welche die untere Grenze des Betriebstemperaturbereiches bildet, steht der Regulierkolben 11 mit dem Regulierzapfen des durch die Wassertemperatur geregelten Regulieroberteils 9 in der in Figur 1 dargestellten, vorengestellten Regulierstellung, in der bei der Offenstellung des dem Regulieroberteil 2 nachgeschalteten, manuell betätigten Absperroberteils 3 eine maximale Wassermenge durch das Regulierventil fließt. Der sich ergebende Volumenstrom des Ventils wird bestimmt durch den Ringspalt 17, der zwischen dem Außenumfang des Regulierzapfens 15 und dem Innenumfang der Durchlassöffnung 13 gebildet wird.

Beim Überschreiten der vorbestimmten Warmwassertemepratur T_{w} wird durch den Stellhub des Thermostatelementes 10 der Regulierzapfen 15 in Pfeilrichtung a gegen die Federkraft der Rückstellfeder 22 durch den Ventilsitzring 12 nach unten bewegt und der durch den Ringspalt 17 des Ventilsitzringes 12 fließende Wasservolumenstrom wird durch den Ringansatz 16 des sich durch den Ventilsitzring 12 in Pfeilrichtung a bewegenden Regulierzapfens 15 auf einen minimalen Volumenstrom Kᵥmin gedrosselt (vgl. Figur 18).

Wenn sich das durch das Rohrleitungsnetz zirkulierende Warmwasser wieder bis unter die untere Grenze des Betriebstemperaturbereiches abkühlt, bewegt sich der Regulierkolben 11 mit dem Regulierzapfen 15 unter Einwirkung der Federkraft der Rückstellfeder 22 in Pfeilrichtung b in die obere Ausgangsstellung zurück, in welcher der maximale Volumenstrom einreguliert wird.

Das vorbeschriebene Regulierventil kann ohne Unterputzschäfte als Aufputzteil, z.B. in Zwischendecken oder Doppelböden von Gebäuden eingebaut werden. Ferner kann das Regulierventil in einer vereinfachten Ausführungsform ohne das dem thermostatisch geregelten Regulieroberteil nachgeschaltete, manuell betätigte Absperr- und/oder Regulieroberteil hergestellt werden.

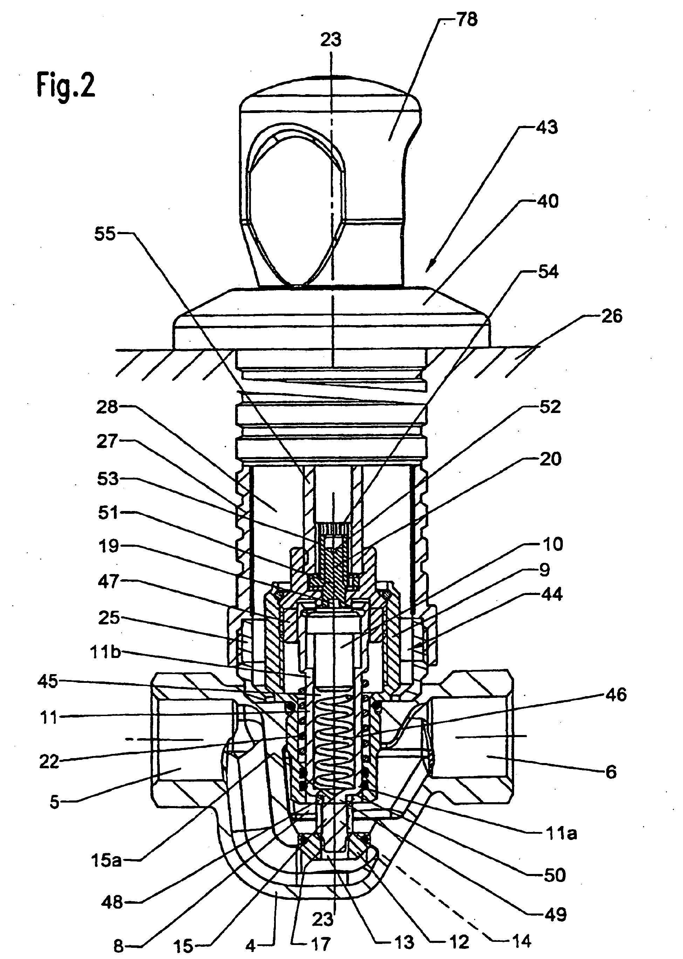

Das in Figur 2 dargestellte, als Unterputzventil ausgebildete Stockwerksregulierventil enthält ein Oberteil 44 mit einer Regulier- und Absperrfunktion, das in einem Regulierkanal 8 des Ventilgehäuses 4 zwischen Einlasskanal 5 und Auslasskanal 6 eingebaut ist.

Das Oberteil 44 weist einen Ventileinsatz 9 mit einem Thermostatelement 10 zum Verstellen des Regulierkolbens 11 mit einem Regulier- und Schließkegel 15 auf, der mit einem mit dem Ventileinsatz 9 einteilig ausgebildeten Ventilsitzring 12 zusammenwirkt, der abgedichtet in dem Regulierkanal 8 gehalten ist und eine Durchlassöffnung 13 zwischen Einlass- und Auslasskanal 5, 6 des Ventilgehäuses 4 bildet. Der freie Strömungsquerschnitt der Durchlassöffnung 13 des durch die Längsstege 14 in dem Ventilensatz 9 gehaltenen Ventilsitzringes 12 ist durch die Position des durch den Ventilsitzring 12 unter Bildung eines Ringspaltes 17 verschiebbaren Regulierzapfens 15 regelbar und der Regulierzapfen ist durch die von der Wassertemperatur abhängige Stellhubbewegung des Thermostatelementes 10 zwischen einer voreinstellbaren Ausgangsstellung zur Einstellung des Maximalvolumenstroms (kᵥmax) bei einer Wassertemperatur von beispielsweise 55°C, und zur Einstellung eines minimalen Volumenstroms (kᵥmin) bei einer Betriebstemperatur des Warmwassers von beispielsweise größer als 57 °C verstellbar.

Das Thermostatelement 10 ist in eine Sacklochbohrung 45 in dem dem Vertilsitz 12 abgewandten Ende 11b des Regulierkolbens 11 eingesetzt und stützt sich einerseits gegen eine in die Sacklochbohrung 45 des Regulierkolbens 11 eingesetzte Überhubfeder 46 und andererseits mit einem aus- und einfahrbaren Stößel 19 gegen ein Widerlager 20 ab.

Das Widerlager 20 sitzt in einem oberen Gewindeformstück 47 und ist in diesem zur Voreinstellung der Sollwerttemperatur in Richtung der Längsachse 23-23 des Ventileinsatzes 9 entgegen Stellkraft einer mit dem Ventileinsatz 9 angeordneten, entgegen der Stellkraft des Themostatelementes 10 wirkenden Rückstellfeder 22 des Regulierkolbens 11 verstellbar.

Zum Absperren des Regulierventil ist das Gewindeformstück 47 zusammen mit dem Regulierkolben 11 und dem in diesem sitzenden Thermostatelement 10 entgegen der Federkraft der Rückstellfeder 22 des Regulierkolbens 11 in Richtung der Längsachse 23-23 des Ventileinsatzes 9 bis zur Anlage eines Dichtringes 48, der in eine Ringnut 49 am oberen Ende 15a des in den Ventilsitzring 12 eintauchenden Regulierzapfens 15 eingelegt ist und sich an einer Ringschulter 50 am unteren Ende 11 a des Regulierkolbens 11 abstützt, an dem Ventilsitzring 12 verstellbar, wobei ein nach dem Absperren des Ventils 43 erfolgter Stellhub des Thermostatelementes von der Überhubfeder 46 kompensiert wird.

Die Federkraft der Überhubfeder 46 ist größer als die Federkraft der Rückstellfeder 22 des Regulierkolbens 11.

Das verstellbare Widerlager 20 für den Stößel 19 des Thermostatelementes 10 ist als Gewindestift 51 mit einem Schraubendreherschlitz 52 ausgebildet und der Gewindestift 51 ist formschlüssig mit einem Rastelement 53 verbunden, das in entsprechende Rastausnehmungen eines Rasterringes 54 des Gewindeformstücks 47 einrastet.

In das Gewindeformstück 47 ist eine Hohlspindel 55 konzentrisch zum verstellbaren Widerlager 20 und dem Regulier- und Absperrzapfen 15 in Richtung der Längsachse 23-23 des Ventileinsatzes 9 zum Absperren des Regulierventils eingesetzt.

Das Ventilgehäuse 4 weist einen Anschlussstutzen 25 zum Befestigen eines über das Mauerwerk 26 vorstehenden Unterputzschafts 27 mit einem Zugangskanal 28 zur Voreinstellung der Ausgangsstellung des in den Ventileinsatz 9 axial verstellbaren Regulierkolbens 11 mit dem Regulier- und Schließzapfen 15 auf.

Der Unterputzschaft 27 des Regulierventils 43 wird mit einer auf das Mauerwerk 26 aufsetzbaren Rosette 40 hygienisch dicht verschlossen, die eine Öffnung zur Aufnahme eines Bediengriffs 78 zum Drehen der Hohlspindel 55 für das Absperren und Öffnen des Regulierventils 43 aufweist.

Die Regulier- bzw. Absperroberteile 2, 3, 44 der vorbeschriebenen Ausführungsbeispiele der egulierventile können eine Bohrung zur Aufnahme eines Thermometers oder eines Thermoelementes zur Messung der Warmwassertemperatur aufweisen.

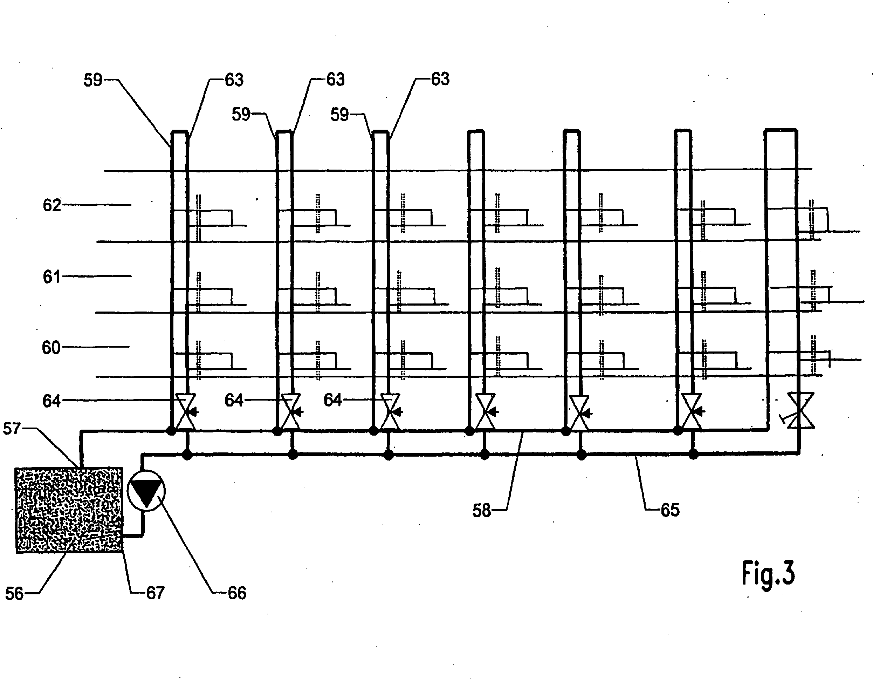

Das ausschnittsweise in Figur 3 dargestellte Schema einer Warmwasserversorgungsanlage für ein mehrstöckiges Gebäude zeigt einen Trinkwassererwärmer 56 mit einem TWW-Anschluss 57 (TWW = Trinkwasser warm) für eine TWW-Leitung 58, von der Steigleitungen 59 zum Erdgeschoss 60 und zwei Stockwerken 61, 62 abzweigen. Die Steigleitungen 59 sind jeweils über eine parallel verlegte Steigstrang-TWZ-Leitung (TWZ = Trinkwasser Zirkulation) mit einem eingebauten Regulierventil 64 für den hydraulischen Abgleich der Steigleitungen 59 mit einer Zirkulationssammelleitung 65 verbunden, in die eine Umwälzpumpe 66 eingebaut ist, die an den TWZ-Anschluss 67 des Trinkwassererwärmers 46 angeschlossen ist.

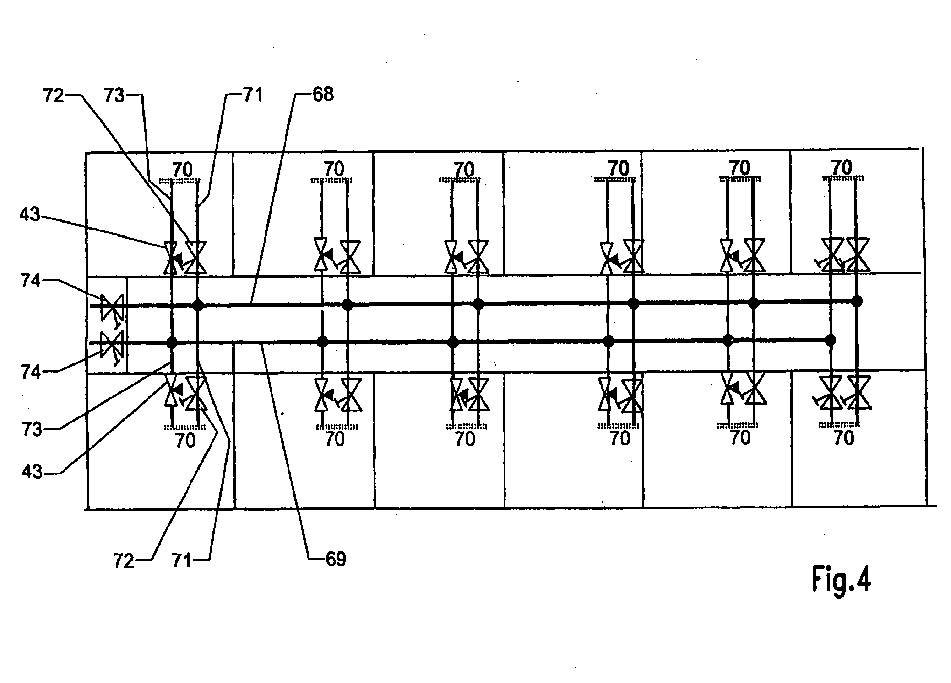

Das in Figur 4 schematisch dargestellte Leitungsnetz für verschiedene Wohnungen im Erdgeschoss 60 und den beiden Stockwerken 61, 62 eines mehrstöckigen Gebäudes umfasst eine Stockwerk-TWW-Leitung 68, die an eine Steigleitung 59 angeschlossen ist, sowie eine Stockwerk-Zirkulationssammelleitung 69, die an die TWZ-Leitung 63 der Steigleitung 59 angeschlossen ist. Die verschiedenen Zapfstellen 70 einer Etagenwohnung sind jeweils über eine TWW-Leitung 71 mit einem eingebauten Absperrventil 72 an die Stockwerk-TWW-Leitung 68 und über eine TWZ-Leitung 73 mit einem eingebauten Regulierventil 43 für den hydraulischen Abgleich der TWW-Leitungen 71 der verschiedenen Zapfstellen 70 untereinander an die Stockwerk-Zirkulationssammelleitung 69 angeschlossen. Die Stockwerk-TWW-Leitung 68 und die Stockwerk-Zirkulationssammelleitung 69 einer Etagenwohnung können jeweils mit einem Absperrventil 74 abgesperrt werden.

Figur 5 zeigt einen schematischen Grundriss eines Zimmers 75 in einem Stockwerk eines Gebäudes mit einer sanitären Nasszelle 76 mit zwei Zapfstellen 70 und einer Stockwerkszirkulation bis zu den Zapfstellen, wobei das Absperrventil 72 in der TWW-Leitung 71 und das Stockwerkregulierventil 43 des Stockwerks in der TWZ-Leitung 73 als Unterputzventile ausgebildet sind.

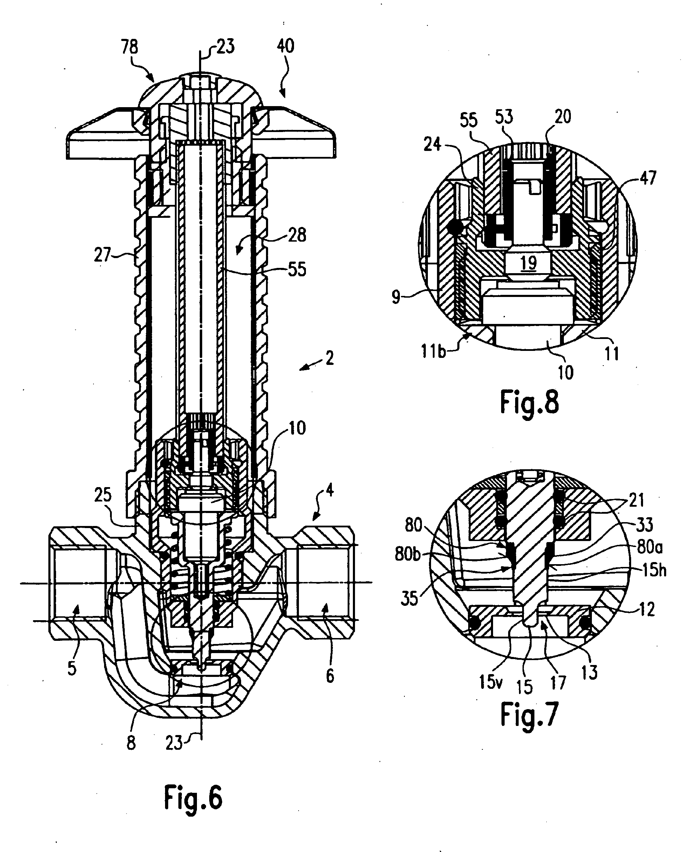

Das als Unterputzventil ausgebildete Stockwerkregulierventil gemäß der Darstellung in Figur 6 für ein Warmwasser-Zirkulationssystem umfasst ein durch die Warmwasserarmatur geregeltes, voreinstellbares Regulieroberteil 2 sowie ein Gehäuse 4 z.B. aus Edelstahl oder Rotguß mit einem Strömungseinlass bildenden Einlasskanal 5 und einen einen Strömungsauslass bildenden Auslasskanal 6.

Das als Geradsitzventil ausgebildete Regulieroberteil 2 weist einen Regulierkanal 8 auf, der den Einlasskanal 5 mit dem Auslasskanal 6 verbindet und einen Ventileinsatz 9 aufnimmt.

Der Ventileinsatz 9 ist mit einem Thermostatelement 10 zum Verstellen eines Regulierkolbens 11 ausgestattet, der mit einem einteilig mit dem zylindrischen Ventileinsatz 9 ausgebildeten Ventilsitzring 12 zusammenwirkt, der abgedichtet in dem Regulierkanal 8 gehalten ist und einen sich in axialer Richtung 23-23 des Ventileinsatzes 9 erstreckenden Durchlassöffnung 13 vorgibt, durch die der Einlasskanal 5 mit dem Auslasskanal 6 verbunden ist. Der Regulierkolben 11 weist einen an seinem unteren Ende 11 a angeformten Regulierzapfen 15 auf, der in den Durchlassöffnung 13 eingetaucht, wie eine Drossel wirkt und einen vorderen Zapfenabschnitt 15v sowie einen hinteren Zapfenabschnitt 15h umfasst, die über einen konkav gekrümmten Übergangsbereich miteinander verbunden sind.

Der freie Regulierquerschnitt der Durchlassöffnung 13 des durch Längsstege 14 in dem Ventileinsatz 9 gehaltenen Ventilsitzringes 12 ist durch die Position des durch den Ventilsitzring 12 unter Bildung eines Ringspaltes 17 verschiebbaren Regulierzapfens 15 regelbar. Der Regulierkolben 11 mit dem Regulierzapfen 15 ist durch die von der Wassertemperatur abhängige Stellhubbewegung des Thermostatelementes 10 zwischen einem kᵥ-Maximalwert (maximaler Volumenstrom in m³/h bei 1 bar Druckverlust über dem Ventil) und dem kᵥ-Minimalwert (minimaler Volumenstrom in m³/h bei 1 bar Druckverlust über dem Ventil) bei einer in einem Temperaturbereich von beispielsweise 55°C bis 60°C liegenden Betriebstemperatur einstellbar.

Das Thermostatelement 10 ist in einem entsprechend angepassten und in dem Regulierkolben 11 ausgesparten Aufnahmeschacht 18 aufgenommen, der an dem den Ventilsitzring 12 abgewandten oberen Ende 11 b des Regulierkolbens 11 ausgespart ist, und stützt sich gegen ein Widerlager 20 im Ventileinsatz 9 ab.

Das Widerlager 20 sitzt in einer Stellschraube 24 und ist in diesem zur Voreinstellung einer Sollwerttemperatur in Richtung der Längsachse 23-23 des Ventileinsatzes 9 entgegen der Federkraft einer in dem Ventileinsatz 9 angeordneten, entgegen der Stellkraft des Thermostatelementes 10 wirkenden Rückstellfeder 22 des Regulierkolbens 11 verstellbar. Diese Rückstellfeder 22 ist in einem abgestuften Bereich des Aufnahmeschachtes 18 benachbart zu dem Thermostatelement 10 angeordnet und wirkt auf dieses ein. Die Stellschraube 24 bildet für den Stößel 19 zwischen dem Thermostatelement 10 und dem Widerlager 20 eine Führung aus.

Das Widerlager 20 ist durch einen im Gewindeeingriff mit der Stellschraube 24 stehenden Stößel 19 und ein Rastelement 53 gebildet. Dieses Rastelement 53 ist aus Kunststoff gebildet, verdrehfest mit dem oberen Zapfen des Stößels 19 verbunden und wirkt mit der Stellschraube 24 derart zusammen, dass bei der Voreinstellung der Temperatur durch Drehung des Stößels 19 hör- und/oder fühlbare Rastereinstellungen zu bemerken sind. Hierzu sind zwischen dem Spindelement 21 und dem Rastelement 53 Rastzähne vorgesehen, durch welche beide Teile auch gegeneinander verdrehgesichert gehalten sind. Zusätzlich können die Teile nach Einstellen der Voreinstellung durch weitere Maßnahmen verdrehgesichert werden, beispielsweise durch Eintropfen einer aushärtenden Flüssigkeit und /oder einem vorgefertigten, sich zwischen dem Rastelement 53 und der Stellschraube 24 erstreckenden Formschlusselement.

An das Ventilgehäuse 4 ist koaxial zur Längsachse 23-23 des Ventileinsatzes 9 ein Anschlussstutzen 25 angeformt, an dem ein über das Mauerwerk 26 vorstehender Unterputzschaft 27 mit einem Zugangskanal 28 zur Voreinstellung der Ausgangstellung des in dem Ventileinsatz 9 axial verstellbaren Regulierkolbens 11 für Wartungs- und Reparaturarbeiten angeschraubt ist. Der Unterputzschaft 27 wird mit einer auf das Mauerwerk 26 aufsetzbaren Rosette 40 hygienisch dicht verschlossen, die eine Öffnung zur Aufnahme eines Betätigungselementes 78 aufweist, welches über eine Hohlspindel 55 verdrehfest mit der Stellschraube 24 verbunden ist. Das Betätigungselement 78 weist in an sich bekannter Weise vorzugsweise eine Aufnahme für einen Innensechskantschlüssel auf, mit dem das Betätigungselement in Drehung versetzt werden kann.

Wie insbesondere der Figur 7 zu entnehmen ist, wird der Regulierkolben 11 in dem Ventileinsatz 9 in Richtung der Längsachse 23-23 des Ventileinsatzes 9 geführt und ist über Dichtringe 21 gegenüber dem Ventileinsatz 9 abgedichtet.

Zwischen den Dichtringen 21 und dem Regulierzapfen 15 ist ein Dichtelement 80 angeordnet, welches an seinem dem Ventilsitzring 12 benachbarten Ende einen Zylinderabschnitt 80a umfasst, dem eine konische Dichtfläche 80b folgt. Im Anschluss an diesen konischen Abschlussabschnitt 80b weist das Dichtelement 80 ein vorgelagertes zylindrisches Reinigungselement 81 auf. Bei dem gezeigten Ausführungsbeispiel bilden der konische und der zylindrische Abschnitt 80a, b das Dichtelement 80 aus, das in an sich bekannter Weise mit dem Ventilsitzring 12 zusammenwirkt, um die Regulieröffnung 13 zu verschließen. Das Reinigungselement 81 weist vorliegend einen Durchmesser auf, der in etwa so groß ist, wie der Durchmesser der Regulieröffnung 13. Kurz vor dem Schließen der Regulieröffnung 13 durch Anlage der an dem konischen Abschnitt 80b ausgebildeten Dichtfläche gegen eine an dem Ventilsitzring 12 ausgebildete Gegenfläche, tritt das Reinigungselement 81 in die Durchlassöffnung 13 ein und entfernt eventuell dort an dem Ventilsitzring 12 anhaftende Verunreinigungen. Dadurch wird sichergestellt, dass die Durchlassöffnung 13 auch bei einer längeren Benutzung des Regulierventils den bei der Auslegung des Ventils vorgegebenen und dem hydraulischen Abgleich zugrundeliegenden Regulierquerschnitt aufweist.

Die Übertragung der durch das Betätigungselement 78 aufgebrachten und durch die Hohlspindel 55 übertragenen Drehbewegung in eine axiale Verschiebung des Regulierkolbens 11 wird nachfolgend unter Bezugnahme auf die Figur 8 näher erläutert.

Der Figur 8 ist zu entnehmen, dass zwischen der Außenumfangsfläche der Stellschraube 24 und der dieser gegenüberliegenden Innenumfangsfläche des Ventileinsatzes 9 ein zylindrisches Gewindeformstück 47 vorgesehen ist. Das Gewindeformstück 47 hat eine polygonale Außenumfangsfläche und wird in einer entsprechend ausgeformten Aussparung des Ventileinsatzes 9 verdrehsicher, jedoch in axialer Richtung verschieblich gehalten. Das zylindrische Gewindeformstück 47 befindet sich mit der Stellschraube 24 im Gewindeeingriff. Bei Drehung des Betätigungselements 78 wird die Stellschraube 24 gleichfalls in Drehung versetzt. Hierbei wandert das Gewindeformstück 47 in axialer Richtung und legt sich mit seiner Stirnseite an eine am oberen Ende 11b des Regulierkolbens 11 ausgebildete Anlagefläche an. Bei fortschreitender Drehbewegung des Betätigungselements 78 wird das Gewindeformstück 47 mit seiner vorderen Stirnseite zunehmend von der Stellschraube 24 entfernt und schiebt hierbei den Regulierkolben 11 gegen die Kraft einer Rückstellfeder 22 vor sich her, bis schließlich der Zylinderabschnitt 80a in die Durchlassöffnung 13 eintritt und am Ende der Absperrbewegung der konische Abschnitt 80b an einer entsprechend ausgeformten Gegenfläche des Ventilsitzringes 12 anliegt und das Regulierventil versperrt. Beim Aufdrehen des Ventils durch Betätigung des Bediengriffs 78 wird der Regulierkolben 11 durch die Rückstellfeder 35 zurückgestellt. Die Federkraft der Überhubfeder 46 ist größer als die der Rückstellfeder 22.

Die Erfindung ist nicht auf das gezeigte Ausführungsbeispiel eines Stockwerkregulierventils beschränkt. So ist es insbesondere möglich, das Reinigungselement nicht wie bei dem gezeigten Ausführungsbeispiel stoffidentisch mit dem durch das Dichtelement auszuformen. Das Reinigungselement kann insbesondere mit weiterem axialen Abstand in Richtung auf den Ventilsitzring vor dem Dichtring vorgesehen sein, um bereits bei einer Drosselstellung des Regulierzapfens 15 in der Durchlassöffnung 13 an den die Regulieröffnung 13 umgebenden Wandungen zur Wirkanlage zu gelangen.

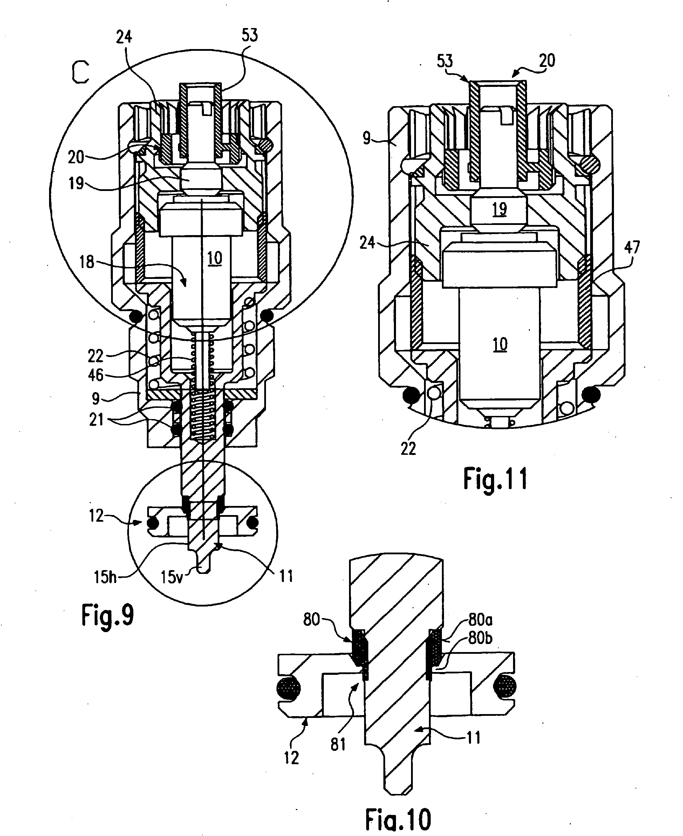

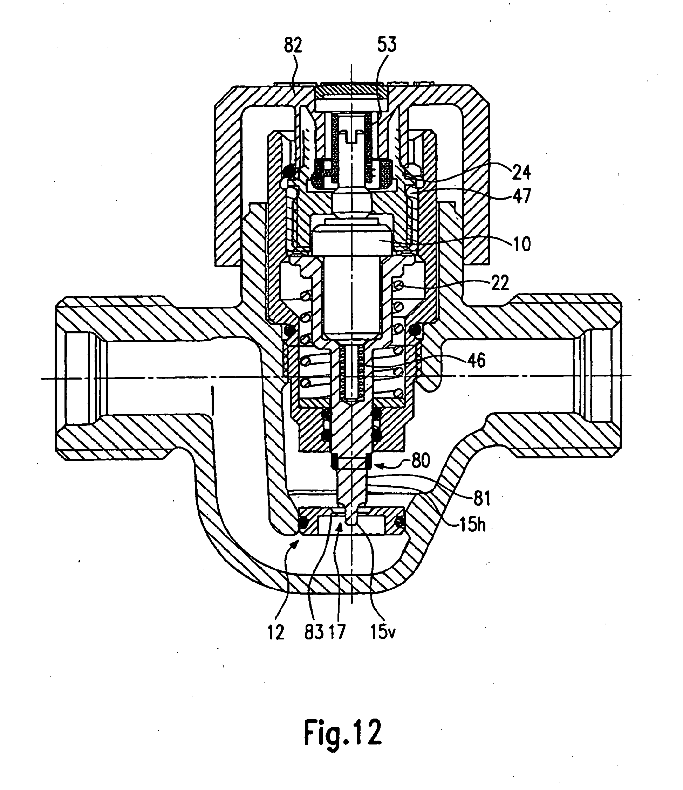

Die Figur 12 zeigt ein weiteres Ausführungsbeispiel eines Regulierventils in einer Aufputzausführung. Statt der in den Figuren 6-11 gezeigten Hohlspindel weist das in Figur 12 gezeigte Ausführungsbeispiel ein mit der Stellschraube 24 verdrehfest verbundenes Handrad 82 auf. Ansonsten entspricht die Ausgestaltung des in Figur 12 gezeigten Ausführungsbeispiels im Wesentlichen der Ausgestaltung der in den Figuren 6-11 verdeutlichten Ausführungsbeispiele. Das Reinigungselement ist ferner einstückig als abgedrehte Zylinderfläche an dem Regulierkolben 11 ausgebildet. Bei dieser Ausführungsform sind die Durchlassöffnung 13 und das Reinigungselement nach Art einer Passung derart aufeinander abgestimmt, dass das Reinigungselement durch die Durchlassöffnung 13 hindurch passt, hierbei jedoch eventuell an der Wandung der Durchlassöffnung 13 anhaftende Verschmutzung ablöst.

In Figur 12 ist die Stellung des Regulierzapfens 15 relativ zu der Durchlassöffnung 13 bei einer tatsächlichen Warmwassertemperatur unterhalb der vorbestimmten Warmwassertemperatur T_{w} (vorliegend T_{w} =50°C) gezeigt. In dieser Ausgangsstellung befindet sich der vordere Zapfenabschnitt 15v in der Durchlassöffnung 13, die einen in axialer Richtung gestuften Verlauf hat mit einer die Durchlassöffnung 13 in etwa auf den Durchmesser des hinteren Zapfenabschnittes 15h vermindernden Blende 83.

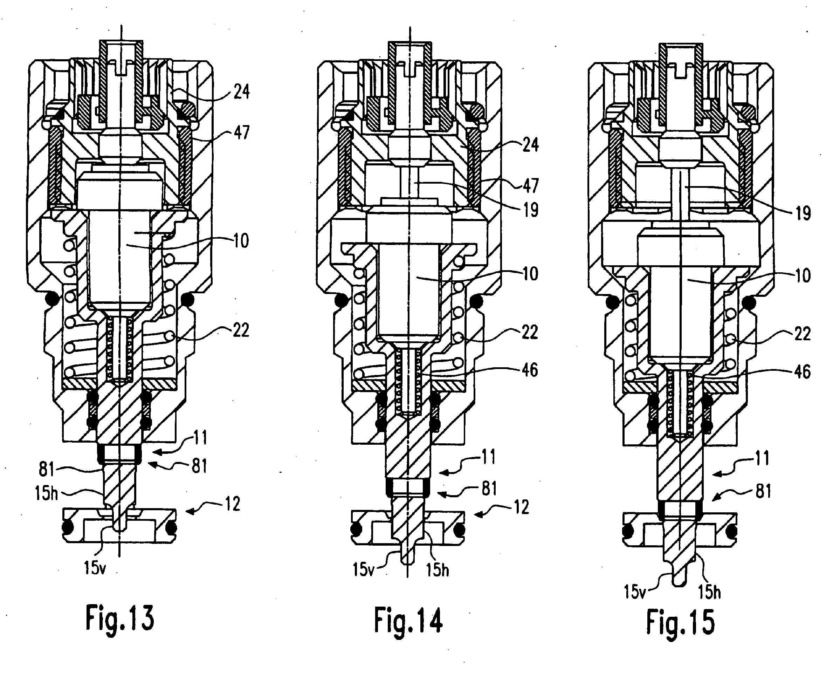

Die Figuren 13-17 zeigen unterschiedliche Ventilstellungen, die teilweise durch den Hub des Thermostatelementes 10, teilweise durch eine Handbetätigung des Gewindeformstückes 47 und teilweise durch eine Überlagerung der beiden Hubbewegungen eingestellt worden sind.

Ausgehend von der in Figur 12 gezeigten Darstellung hat sich der Regulierkolben 11 auf Grund einer Hubbewegung des Thermostatelementes 10 bei fortschreitender Erwärmung des Warmwassers auf eine Temperatur von 57°C weiter in Richtung auf den Ventilsitzring 12 zu bewegt. Dabei ist der den vorderen Zapfenabschnitt 15v und den hinteren Zapfenabschnitt 15h verbindender konvex gekrümmter Übergangsabschnitt an der Blende 83 vorbeigestrichen. Die danach bei einer Temperatur von 57°C erreichte Ventilstellung ist in Figur 13 gezeigt. Bei dieser Ventilstellung ist die Vorderkante des hinteren Zapfenabschnitts 15h von der Blende 83 umgeben. Der Volumenstrom durch das Ventil ist durch den Ringspalt 17 zwischen der Innenumfangsfläche der Blende 83 und der Außenumfangsfläche des hinteren Zapfenabschnittes 15h bestimmt. Der sich ergebende Volumenstrom ist der minimale Volumenstrom des Ventils (vgl. Figur 18).

Bei stärkerer Erwärmung des durchgeleiteten Warmwassers auf eine Temperatur über 57°C wird die in Figur 14 gezeigte Stellung eingenommen. Auf Grund der Hubbetätigung des Thermostatelementes 10 wurde der Regulierkolben 11 weiter entgegen der Rückstellkraft der Rückstellfeder 22 in Richtung auf den Ventilsitzring verschoben. Hierbei wurde jedoch nicht die Größe des Ringspaltes 17 verändert, was sich in der Temperaturkurve gemäß Figur 18 als konstante Linie in einem Temperaturbereich oberhalb T_{b} zeigt. Mit anderen Worten bleibt der kv-min-Wert konstant.

Figur 15 zeigt das Thermostatelement 10 bei maximal ausgefahrenem Stößel 19 bei einer Temperatur von etwa 90 °C. Zusätzlich wurde durch Handbetätigung des Gewindeformstücks 47 der Ventileinsatz 9 insgesamt in Richtung auf den Ventilsitzring 12 so weit vorgeschoben, dass das hinter dem hinteren Zapfenabschnitt 15h ausgebildete Reinigungselement 81, welches durch spanhebende Bearbeitung an dem Regulierkolben 11 ausgeformt ist, in die Blende 83 eingebracht wurde. Bei dieser Zustellbewegung zur Abdichtung der Durchlassöffnung 13 durch Anlage des Dichtelementes 80 an den Ventilsitzring 12 werden in der Durchlassöffnung 13 anhaftende Verunreinigungen entfernt.

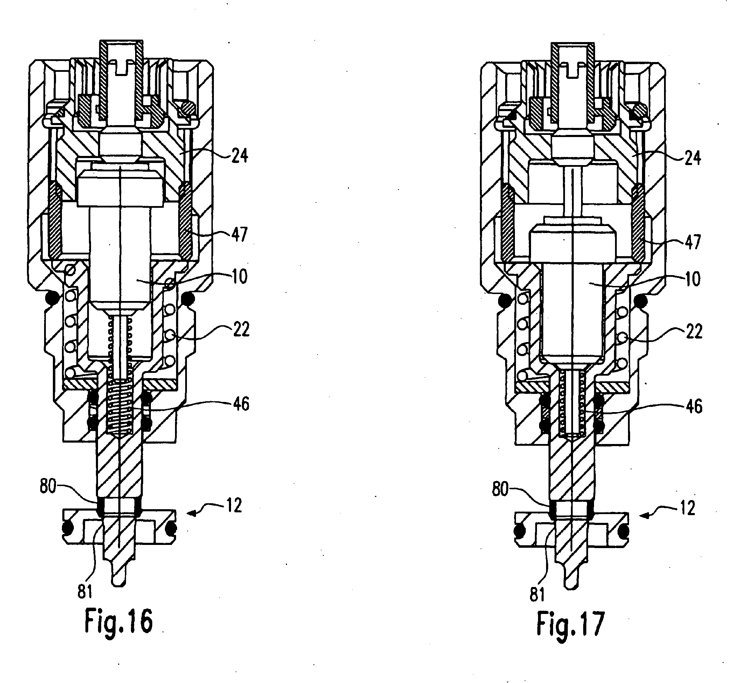

Sinkt die Temperatur des hindurchgeleiteten Wassers bei der in Figur 15 gezeigten Stellung, so fährt der Stößel 19 des Thermostatelementes 10 ein. Auf Grund der Federkraft der Überhubfeder 46 wird das Thermostatelement 10 dabei unter Vorspannung gegen das Widerlager 20 gedrückt, wohingegen die Stellung des Regulierkolbens 11 relativ zu dem Ventilsitzring 12 aufgrund der Stellung des Gewindeformstücks 47 unverändert bleibt. Das Ventil bleibt bei der Darstellung in Figur 16, die sich bei einer Temperatur von 57°C einstellt, geschlossen.

In Figur 17 ist die Anordnung der wesentlichen Elemente des Ventileinsatzes 9 bei einer Temperatur unterhalb der vorgeschriebenen Warmwassertemperatur, d.h. unterhalb von 50 °C verdeutlicht. Auch hier bleibt auf Grund der Vorstellbewegung des Ventileinsatzes 9 aufgrund der Stellung des Gewindeformstückes 47 das Ventil geschlossen. Die Überhubfeder 46 wurde gegenüber der in Figur 16 gezeigten Stellung weiter entspannt und drückt weiterhin das Thermostatelement 10 gegen das Widerlager 20.

### Bezugszeichenliste

- 2: Regulieroberteil
- 3: Absperr- und/oder Regulieroberteil
- 4: Ventilgehäuse
- 5: Einlasskanal
- 6: Auslasskanal
- 7: Zwischenkanal
- 8: Durchlassöffnung
- 9: Ventileinsatz
- 10: Thermostatelement
- 11: Regulierkolben
- 11a: unteres Ende
- 11 b: oberes Ende
- 12: Ventilsitzring
- 13: Durchlassöffnung
- 14: Längssteg
- 15: Regulierzapfen
- 15a: oberes Ende
- 15v: vorderer Zylinderabschnitt
- 15h: hinterer Zylinderabschnit
- 16: Ringansatz
- 17: Ringspalt
- 18: Aufnahmeschacht
- 19: Stößel
- 20: Widerlager
- 21: Dichtring
- 22: Rückstellfeder
- 23-23: Längsachse des Ventileinsatzes
- 24: Stellschraube
- 25: Anschlussstutzen
- 26: Mauerwerk
- 27: Unterputzschaft
- 28: Zugangskanal
- 29: Anschlussstutzen
- 30: Aufnahmeöffnung
- 32: Regulierzapfen
- 33: Dichtring
- 34: Durchlassöffnung
- 35: Auslassstutzen
- 36: Ventilsitz
- 37: Unterputzschaft
- 38: Unterputzschaft
- 39: Innensechskant
- 40: Rosette
- 41: Öffnung
- 42: Behördenkappe
- 43: Regulierventil
- 44: Oberteil
- 45: Sacklochbohrung
- 46: Überhubfeder
- 47: Gewindeformstück
- 48: Dichtring
- 49: Ringnur
- 50: Ringschulter
- 51: Gewindestift
- 52: Schraubendreherschlitz
- 53: Rastelement
- 54: Rasterring
- 55: Hohlspindel
- 56: Trinkwassererwärmer
- 57: TWW-Anschluss
- 58: TWW-Leitung
- 59: Steigleitung
- 60: Erdgeschoss
- 61: Stockwerk
- 62: Stockwerk
- 63: Steigstrang-TWz-Leitung
- 64: Regulierventil
- 65: Zirkulationssammelleitung
- 66: Umwälzpumpe
- 67: TWZ-Anschluss
- 68: Stockwerk-TWW-Leitung
- 69: Stockwerk-Zirkulationssammelleitung
- 70: Zapfstelle
- 71: GEWW-Leitung
- 72: Absperrventil
- 73: TWZ-Leitung
- 74: Absperrventil
- 75: Zimmer
- 76: Nasszelle
- 77: Zwischendecke
- 78: Bediengriff
- 80: Dichtelement
- 80a: Zylinderabschnitt des Dichtelementes
- 80b: konischer Abschnitt des Dichtelementes
- 81: Reinigungselement
- 82: Handrad
- 83: Blende

## Patentansprüche

1. Regulierventil mit einem Ventilgehäuse (4), welches einen Strömungseinlass (5) und einen Strömungsauslass (6), bildet, die miteinander kommunizieren und zwischen denen eine Durchlassöffnung (13) befindlich ist und an dem ein Ventileinsatz (9) montiert ist, der einen von einem Thermostatelement (10) gestellten Regulierkolben (11) zur Drosselung der Strömung in der Durchlassöffnung (13) aufweist,
**dadurch gekennzeichnet**
**dass** der Ventileinsatz (9) zusammen mit einem die Durchlassöffnung (13) umgebenden Ventilsitzring (12) als einheitliches Bauteil ausgebildet und in das Ventilgehäuse (4) eingesetzt ist und
**dass** an dem freien Ende des Regulierkolbens (11) ein in die Durchlassöffnung (13) eingreifender Regulierzapfen (15) angebracht ist, durch den der Volumenstrom des Ventils durch Veränderung eines Spaltes zwischen dem Außenumfang des Regulierzapfens (15) und dem Innenumfang der Durchlassöffnung (13) derart drosselbar ist, dass aufgrund der Stellbewegung des Thermostatelements (10) bei einer Wassertemperatur unterhalb einer vorbestimmten Warmwassertemperatur (T_{w}) ein maximaler Volumenstrom (Kᵥmax) und bei einer Wassertemperatur oberhalb einer vorbestimmten Betriebstemperatur (T_{b}) ein minimaler Volumenstrom (Kᵥmin) einreguliert wird.

2. Regulierventil nach Anspruch 1, **dadurch gekennzeichnet, dass** der Regulierzapfen (15) einen vorderen Zapfenabschnitt (15v) und einen im Durchmesser gegenüber dem vorderen Zapfenabschnitt (15v) vergrößerten hinteren Zapfenabschnitt (15h) aufweist und dass der vordere Zapfenabschnitt (15v) bei der Regulierung des maximalen Volumenstromes (Kᵥmax) in der Durchlassöffnung (13) befindlich ist.

3. Regulierventil nach Anspruch 2, **dadurch gekennzeichnet, dass** entweder an der Außenumfangsfläche des Regulierzapfens (15) im Anschluss an den vorderen Zapfenabschnitt (15v) ein Ringansatz (16) ausgebildet ist, der zur Regulierung des minimalen Volumenstromes (Kᵥmin) in der Durchlassöffnung (13) befindlich ist oder an der Innenumfangsfläche der Durchlassöffnung (13) ein konisch zulaufender Kragen (83) ausgebildet ist, der eine Kragenöffnung freilässt, die ein wenig größer als der Außendurchmesser des hinteren Zapfenabschnittes (15h) ist.

4. Regulierventil nach einem der vorherigen Ansprüche, **dadurch gekennzeichnet, dass** der den minimalen Volumenstrom regulierende Spalt (17) nahezu keine axiale Erstreckung aufweist.

5. Regulierventil nach einem der vorherigen Ansprüche, **dadurch gekennzeichnet, dass** der minimale Volumenstrom (Kᵥmin) vorzugsweise weniger als 0,08 m³/h, vorzugsweise weniger als 0,05 m³/h beträgt.

6. Regulierventil nach einem der vorherigen Ansprüche, **dadurch gekennzeichnet, dass** das Thermostatelement (10) in einen Aufnahmeschacht (18) in dem dem Ventilsitzring (12) abgewandten Ende (11b) des Regulierkolbens (11) eingesetzt ist und zwischen einem in dem Ventileinsatz (9) befestigten Widerlager (20) und dem Aufnahmeschacht (18) in Wirkrichtung des Thermostatelementes (10) abgestützt ist.

7. Regulierventil nach einem der vorherigen Ansprüche, **dadurch gekennzeichnet, dass** stirnseitig des Aufnahmeschachtes (18) ein drehbar in dem Ventileinsatz (9) aufgenommenes Spindelelement (21) angeordnet ist, welches verdrehfest mit einem Betätigungselement (78) verbunden und mit einem Gewindeformstück (47) im Gewindeeingriff ist, welches verdrehfest jedoch verschieblich in dem Ventileinsatz (9) aufgenommen und durch Betätigung des Betätigungselements (78) zur Längsverschiebung des Regulierkolbens (11) mit diesem in Wirkverbindung bringbar ist.

8. Regulierventil nach einem der vorherigen Ansprüche, **dadurch gekennzeichnet, dass** der Regulierkolben (11) mittels einer entgegen der Stellkraft des Thermostatelementes (10) wirkenden Rückstellfeder (22) in Wirkrichtung des Thermostatelementes (10) unter Vorspannung gehalten ist.

9. Regulierventil nach Anspruch 8, **dadurch gekennzeichnet, dass** das Thermostatelement (10) sich mit einem aus- und einfahrbaren Stößel (19) gegen ein Widerlager (20) in dem Ventileinsatz (9) abstützt und gegenüber diesem verdrehsicher gehalten ist.

10. Regulierventil nach einem der vorherigen Ansprüche, **gekennzeichnet durch** eine Stellschraube (24) zur Voreinstellung des Reguliericolbens (11) mit dem Regulierzapfen (15), die in einer hör- und/oder fühlbare Rastereinsteltung zur Voreinstellung der Solltemperatur gehalten ist.

11. Regulierventil nach einem der vorherigen Ansprüche, **dadurch gekennzeichnet, dass** die Stellkraft des Thermostatelementes (10) größer als die Federkraft der Rückstellfeder (22) des Regulierkolbens (11) ist.

12. Regulierventil nach einem der vorherigen Ansprüche, **dadurch gekennzeichnet, dass** der Ventilsitzring (12) durch Längsstege (14) in dem Ventileinsatz (9) gehalten ist.

13. Regulierventil nach einem der vorherigen Ansprüche, **gekennzeichnet durch** den Einbau zusammen mit einem manuell betätigten, nachgeschalteten Absperr- und/oder Regulieroberteil (3) in einem Ventilgehäuse (4) mit einem Einlass- und einem Auslasskanal (5, 6), die **durch** einen Zwischenkanal (7) miteinander verbunden sind.

14. Regulierventil nach Anspruch 13, **gekennzeichnet durch** einen bei der Unterputzventilausführung an dem Anschlussstutzen (29) des Ventilgehäuses (4) befestigten, über das Mauerwerk (26) vorstehenden Unterputzschaft (37) mit einem Zugangskanal (38) zum Verstellen des Regulierzapfens (15) des Absperr- und/oder Regulieroberteils (3) für Wartungs- und Reparaturarbeiten.

15. Regulierventil nach einem der vorherigen Ansprüche, **gekennzeichnet durch** eine abnehmbare Rosette (40) zum hygienisch einwandfreien Verschließen des bzw. der über das Mauerwerk (26) vorstehenden Unterputzschaftes (27) bzw. Unterputzschäfte (27, 39) des bzw. der Regulieroberteile (2, 3), wobei die Rosette (40) eine Öffnung (41) über dem Absperroberteil (3) zur Aufnahme eines Bediengriffs oder einer Behördenkappe (42) und eine Öffnung über dem Regulieroberteil (2) zur Aufnahme einer Verschlusskappe aufweist.

16. Regulierventil nach einem der vorherigen Ansprüche, **dadurch gekennzeichnet, dass** das Thermostatelement (10) in eine Sacklochbohrung (45) in dem dem Ventilsitzring (12) abgewandten Ende (11b) des Regulierkolbens (11) eingesetzt ist, sich einerseits gegen eine in den Aufnahmeschacht (10, 45) des Regulierkolbens (11) eingesetzte Überhubfeder (46) und andererseits mit einem aus- und einfahrbaren Stößel (19) gegen ein Widerlager (20) abstützt, das in einem oberen Gewindeformstück (47) sitzt und in diesem zur Voreinstellung der Sollwerttemperatur in Richtung der Längsachse (23-23) des Ventileinsatzes (9) entgegen der Federkraft einer in dem Ventileinsatz angeordneten, entgegen der Stellkraft des Thermostatelementes (10) wirkenden Rückstellfeder (22) des Regulierkolbens (11) verstellbar ist, wobei zum Absperren des Regulierventils (43) das Gewindeformstück (47) zusammen mit dem Regulierkolben (11) und dem in diesem sitzenden Thermostatelement (10) entgegen der Federkraft der Rückstellfeder (22) des Regulierkolbens (11) in Richtung der Längsachse (23-23) des Ventileinsatzes (9) bis zur Anlage eines Dichtringes (48), der in eine Ringnut (49) am oberen Ende (15a) des in den Ventilsitzring (12) eintauchenden Regulierkegels (15) eingelegt ist und sich an einer Ringschulter (50) am unteren Ende (11a) des Regulierkolbens (11) abstützt, an dem Ventilsitzring (12) verstellbar ist, wobei ein nach dem Absperren des Ventils (43) erfolgter Stellhub des Thermostatelementes (11) von der Überhubfeder (46) aufgenommen wird.

17. Regulierventil nach Anspruch 16, **gekennzeichnet durch** eine konzentrisch zum verstellbaren Widerlager (20) in das Gewindeformstück (47) eingesetzte Hohlspindel (55) zum Verschrauben des Gewindeformstücks zusammen mit dem Regulierkolben (11) und dem Regulier- und Absperrkegel (15) in Richtung der Längsachse (22, 23) des Ventileinsatzes (9) zum Absperren und Öffnen des Ventils (43).

18. Regulierventil nach einem der vorherigen Ansprüche mit einem Ventilgehäuse (4), welches einen Strömungseinlass (5) und einen Strömungsauslass (6) bildet, die miteinander kommunizieren und zwischen denen eine Durchlassöffnung (13) befindlich ist und an dem ein Ventileinsatz (9) montiert ist, der einen von einem Thermostatelement (10) gestellten Regulierkolben (11) zur Drosselung der Strömung durch die Durchlassöffnung (13) aufweist, **gekennzeichnet durch** ein an dem Regulierzapfen ausgebildetes, in die Durchlassöffnung (13) einbringbares Reinigungselement (81).

19. Regulierventil nach Anspruch 18, **dadurch gekennzeichnet, dass** das Reinigungselement (81) einen Zylinderabschnitt umfasst, dessen Durchmesser etwa so groß oder geringfügig größer als der Innendurchmesser des Ventilsitzringes (12) ist.

20. Regulierventil nach Anspruch 18 oder 19, **dadurch gekennzeichnet, dass** das Reinigungselement (81) stoffidentisch mit einem an dem Regulierzapfen (15) vorgesehenen und zur Abdichtung der Durchlassöffnung (13) an dem Ventilsitzring (12) anlegbaren Dichtelement (80) ausgebildet ist.

21. Regulierventil nach Anspruch 20, **dadurch gekennzeichnet, dass** das Dichtelement (80) und das Reinigungselement (81) einstückig ausgebildet sind.

22. Regulierventil nach einem der vorherigen Ansprüche, **dadurch gekennzeichnet, dass** das Reinigungselement (81) einstückig an dem Regulierkolben (11) ausgebildet ist.

23. Regulierventil nach Anspruch 22, **dadurch gekennzeichnet, dass** das Reinigungselement (81) durch spanhebende Bearbeitung des Regulierkolbens (11) und bezogen auf die Durchlassöffnung (13) nach Art einer Passung ausgebildet ist.

## Claims

1. Control valve having a valve housing (4), which forms a flow inlet (5) and a flow outlet (6), which communicate with one another and between which there is located a passage opening (13), and on which a valve insert (9) is mounted, which comprises a control piston (11), adjusted by a thermostat element (10), for throttling the flow in the passage opening (13), **characterized in that** the valve insert (9) is constructed and inserted into the valve housing (4) as an integral component together with a valve seat ring (12) surrounding the passage opening (13) and **in that** at the free end of the control piston (11) there is fitted a control pin (15) engaging in the passage opening (13), by which the volumetric flow rate of the valve may be throttled by modification of a gap between the outer circumference of the control pin (15) and the inner circumference of the passage opening (13) in such a way that, due to the adjusting movement of the thermostat element (10), a maximum volumetric flow rate (Kvmax) is set at a water temperature below a predetermined hot water temperature (T_{w}) and a minimum volumetric flow rate (Kᵥmin) is set at a water temperature above a predetermined operating temperature (T_{b}).

2. Control valve according to Claim 1, **characterized in that** the control pin (15) comprises a front pin portion (15v) and a rear pin portion (15h) larger in diameter than the front pin portion (15v) and **in that** the front pin portion (15v) is located in the passage opening (13) upon setting of the maximum volumetric flow rate (Kᵥmax).

3. Control valve according to Claim 2, **characterized in that** either at the outer circumferential surface of the control pin (15) adjacent the front pin portion (15v) there is formed an annular nose (16), which is located in the passage opening (13) for setting of the minimum volumetric flow rate (Kᵥmin), or at the inner circumferential surface of the passage opening (13) there is formed a conically tapering collar (83), which opens up a collar opening which is slightly larger than the outer diameter of the rear pin portion (15h).

4. Control valve according to one of the preceding claims, **characterized in that** the gap (17) setting the minimum volumetric flow rate has virtually no axial extension.

5. Control valve according to one of the preceding claims, **characterized in that** the minimum volumetric flow rate (Kᵥmin) preferably amounts to less than 0.08 m³/h, preferably less than 0.05 m³/h.

6. Control valve according to one of the preceding claims, **characterized in that** the thermostat element (10) is inserted into a receiving shaft (18) in the end (11b) of the control piston (11) which is remote from the valve seat ring (12) and is supported between an abutment (20) fastened in the valve insert (9) and the receiving shaft (18) in the effective direction of the thermostat element (10).

7. Control valve according to one of the preceding claims, **characterized in that** a spindle element (21) accommodated rotatably in the valve insert (9) is arranged at the end of the receiving shaft (18), is connected non-rotatably with an actuating element (78) and is in threaded engagement with a threaded shaped member (47), which is accommodated non-rotatably but displaceably in the valve insert (9) and may be brought by actuation of the actuating element (78) into active connection with the control piston (11) for lengthwise displacement thereof.

8. Control valve according to one of the preceding claims, **characterized in that** the control piston (11) is held under pretension in the effective direction of the thermostat element (10) by means of a restoring spring (22) acting contrary to the adjusting force of the thermostat element (10).

9. Control valve according to Claim 8, **characterized in that** the thermostat element (10) is supported with an extendable and retractable plunger (19) against an abutment (20) in the valve insert (9) and held non-rotatably relative thereto.

10. Control valve according to one of the preceding claims, **characterized by** an adjusting screw (24) for presetting the control piston (11) with the control pin (15), which screw is held in an audible and/or tangible detent setting for presetting the required temperature.

11. Control valve according to any one of the preceding claims, **characterized in that** the adjusting force of the thermostat element (10) is greater than the spring force of the restoring spring (22) of the control piston (11).

12. Control valve according to one of the preceding claims, **characterized in that** the valve seat ring (12) is held in the valve insert (9) by longitudinal webs (14).

13. Control valve according to one of the preceding claims, **characterized by** installation together with a manually actuated, downstream shutoff and/or control upper part (3) in a valve housing (4) with an inlet and an outlet duct (5, 6), which are connected together by an intermediate duct (7).

14. Control valve according to Claim 13, **characterized by** a concealed stem (37) fastened, in a concealed valve embodiment, to the connection port (29) of the valve housing (4) and projecting beyond the masonry (26), said stem having an access duct (38) for adjusting the control pin (15) of the shutoff and/or control upper part (3) for maintenance and repair work.

15. Control valve according to one of the preceding claims, **characterized by** a removable rosette (40) for thoroughly hygienic closure of the concealed shaft (27) or concealed shafts (27, 39), projecting beyond the masonry (26), of the control upper part(s) (2, 3), the rosette (40) comprising an opening (41) above the shutoff upper part (3) for accommodating an operating handle or a tamper-proofing cap (42) and an opening above the control upper part (2) for accommodating a closure cap.

16. Control valve according to one of the preceding claims, **characterized in that** the thermostat element (10) is inserted into a blind bore (45) in the end (11b) of the control piston (11) remote from the valve seat ring (12), rests, on the one hand, against an overtravel spring (46) inserted into the receiving shaft (10, 45) of the control piston (11) and, on the other hand, with an extendable and retractable plunger (19), against an abutment (20), which is seated in an upper threaded shaped member (47) and may be adjusted therein, for presetting of the required value temperature, in the direction of the longitudinal axis (23-23) of the valve insert (9) against the spring force of restoring spring (22) of the control piston (11) arranged in the valve insert and acting against the adjusting force of the thermostat element (10), the threaded shaped member (47) being adjustable, for shutting off the control valve (43), together with the control piston (11) and the thermostat element (10) seated therein against the spring force of the restoring spring (22) of the control piston (11) in the direction of the longitudinal axis (23-23) of the valve insert (9) until a sealing ring (48), which is inserted into an annular channel (49) at the upper end (15a) of the control cone (15) reaching into the valve seat ring (12) and rests against an annular shoulder (50) at the lower end (11a) of the control piston (11), comes to rest against the valve seat ring (12), an adjusting stroke of the thermostat element (11) effected after shutoff of the valve (43) being accommodated by the overtravel spring (46).

17. Control valve according to Claim 16, **characterized by** a hollow spindle (55) inserted into the threaded shaped member (47) concentrically relative to the adjustable abutment (20) for screwing the threaded shaped member together with the control piston (11) and the control and shutoff cone (15) in the direction of the longitudinal axis (22, 23) of the valve insert (9) for shutting off and opening the valve (43).

18. Control valve according to one of the preceding claims, having a valve housing (4), which forms a flow inlet (5) and a flow outlet (6), which communicate with one another and between which there is located a passage opening (13), and on which a valve insert (9) is mounted, which comprises a control piston (11), adjusted by a thermostat element (10), for throttling the flow through the passage opening (13), **characterized by** a cleaning element (81) constructed on the control pin and introducible into the passage opening (13).

19. Control valve according to Claim 18, **characterized in that** the cleaning element (81) comprises a cylindrical portion, the diameter of which is approximately the same size as or slightly larger than the internal diameter of the valve seat ring (12).

20. Control valve according to Claim 18 or 19, **characterized in that** the cleaning element (81) is of identical material to a sealing element (80) provided on the control pin (15) and positionable against the valve seat ring (12) to seal the passage opening (13).

21. Control valve according to Claim 20, **characterized in that** the sealing element (80) and the cleaning element (81) are of one-piece construction.

22. Control valve according to one of the preceding claims, **characterized in that** the cleaning element (81) is constructed in one piece on the control piston (11).

23. Control valve according to Claim 22, **characterized in that** the cleaning element (81) is formed by machining the control piston (11) in the manner of a fit relative to the passage opening (13).

## Revendications

1. Vanne de régulation dotée d'un boîtier de vanne (4) qui forme un passage d'entrée d'écoulement (5) et un passage de sortie d'écoulement (6) qui communiquent l'un avec l'autre, une ouverture de passage (13) étant située entre ces passages et montée sur un siège de vanne (9) qui présente un piston de régulation (11) réglé par un élément à thermostat (10) pour étrangler l'écoulement dans l'ouverture de passage (13),
**caractérisée en ce que**
le siège de vanne (9) est configuré comme composant d'un seul tenant avec une bague (12) de siège de vanne qui entoure l'ouverture de passage (13) et est inséré dans le boîtier de vanne (4) et
**en ce qu'**à l'extrémité libre du piston de régulation (11) est disposé un tourillon de régulation (15) qui s'engage dans l'ouverture de passage (13) et par lequel l'écoulement volumique de la vanne peut être étranglé par modification de l'interstice entre la périphérie extérieure du tourillon de régulation (15) et la périphérie intérieure de l'ouverture de passage (13), de telle sorte qu'un écoulement volumique maximal (Kᵥmax) soit réglé suite au déplacement de réglage de l'élément à thermostat (10) à une température d'eau inférieure à une température prédéterminée d'eau chaude (T_{w}) et qu'un écoulement volumique minimum (Tᵥmin) soit réglé une température d'eau supérieure à une température de fonctionnement prédéterminée (T_{b}).

2. Vanne de régulation selon la revendication 1, **caractérisée en ce que** le tourillon de régulation (15) présente une partie avant de tourillon (15v) et une partie arrière de tourillon (15h) dont le diamètre est plus grand que celui de la partie avant de tourillon (15v) et **en ce que** la partie avant de tourillon (15v) est située dans l'ouverture de passage (13) lors de la régulation de l'écoulement volumique maximal (Kᵥmax) dans l'ouverture de passage (13).

3. Vanne de régulation selon la revendication 2, **caractérisée en ce qu'**un appendice annulaire (16) est formé sur la surface périphérique extérieure du tourillon de régulation (15) au raccord à la partie avant de tourillon (15v), lequel appendice annulaire se trouve dans l'ouverture de passage (13) pour la régulation de l'écoulement volumique minimum (Tᵥmin) ou **en ce qu'**un collet (83) qui se rétrécit coniquement et qui libère une ouverture de collet légèrement plus grande que le diamètre extérieur de la partie arrière de tourillon (15h) est formé sur la surface périphérique intérieure de l'ouverture de passage (13).

4. Vanne de régulation selon l'une des revendications précédentes, **caractérisée en ce que** l'interstice (17) qui régule l'écoulement volumique minimum ne présente pratiquement aucune extension axiale.

5. Vanne de régulation selon l'une des revendications précédentes, **caractérisée en ce que** le débit volumique minimum (Kᵥmin) est de préférence inférieur à 0,08 m³/h et mieux inférieur à 0,05 m³/h.

6. Vanne de régulation selon l'une des revendications précédentes, **caractérisée en ce que** l'élément à thermostat (10) est inséré dans un puits de réception (18) ménagé à l'extrémité (11b) du piston de régulation (11) non tournée vers l'anneau (12) de siège de vanne et s'appuie entre un contre-appui (20) fixé dans le siège de vanne (9) et le puits de réception (18) dans la direction d'action de l'élément à thermostat (10).

7. Vanne de régulation selon l'une des revendications précédentes, **caractérisée en ce qu'**un élément de tige filetée (21) repris à rotation dans la garniture de vanne (9) est disposé du côté frontal du puits de réception (18), est relié à rotation solidaire à un élément d'actionnement (78) et s'engage par son filet sur une pièce moulée filetée (47) qui est reprise à rotation bloquée mais à coulissement dans la garniture de vanne (9) et peut être amenée à coopérer avec le piston de régulation (11) lorsque l'élément d'actionnement (78) est actionné pour faire coulisser longitudinalement le piston de régulation.

8. Vanne de régulation selon l'une des revendications précédentes, **caractérisée en ce que** le piston de régulation (11) est maintenu sous précontrainte au moyen d'un ressort de rappel (22) qui agit en opposition à la force d'ajustement de l'élément à thermostat (10) dans la direction d'action de l'élément à thermostat (10).

9. Vanne de régulation selon la revendication 8, **caractérisée en ce que** l'élément à thermostat (10) s'appuie par un poussoir rétractable et déployable (19) contre un contre-appui (20) ménagé dans la garniture de vanne (9) et est maintenu sur ce dernier sans pouvoir tourner.

10. Vanne de régulation selon l'une des revendications précédentes, **caractérisée par** une vis de réglage (24) qui assure le préréglage du piston de régulation (11) par le tourillon de régulation (15) et qui est maintenue dans une trame de réglage audible ou perceptible pour le préréglage de la température de consigne.

11. Vanne de régulation selon l'une des revendications précédentes, **caractérisée en ce que** la force d'ajustement de l'élément à thermostat (10) est supérieure à la force élastique du ressort de rappel (22) du piston de régulation (11).

12. Vanne de régulation selon l'une des revendications précédentes, **caractérisée en ce que** l'anneau (12) de siège de vanne est maintenu dans la garniture de vanne (9) par des nervures longitudinales (14).

13. Vanne de régulation selon l'une des revendications précédentes, **caractérisée en ce qu'**elle est incorporée dans un boîtier de vanne (4) en même temps qu'une pièce supérieure (3) de blocage et/ou de régulation actionnée manuellement et située en aval, ainsi qu'avec un canal d'entrée et un canal de sortie (5, 6) qui sont reliés l'un à l'autre par un canal intermédiaire (7).

14. Vanne de régulation selon la revendication 13, **caractérisée par** une tige encastrée (37) fixée sur la tubulure de raccordement (29) du boîtier de vanne (4) et débordant au-delà de la maçonnerie (26) lorsque la vanne est en exécution encastrée, la tige présentant un canal d'accès (38) pour l'ajustement du tourillon de régulation (15) de la partie supérieure (3) de blocage et/ou de régulation pour les opérations d'entretien et de réparation.

15. Vanne de régulation selon l'une des revendications précédentes, **caractérisée par** une rosace (40) amovible qui permet de fermer hygiéniquement sans problème la tige encastrée (27) ou les tiges encastrées (27, 39) de la ou des parties supérieures de régulation (2, 3) qui débordent au-delà de la maçonnerie (26), la rosace (40) présentant une ouverture (41) au-dessus de la partie supérieure de blocage (3) pour reprendre une poignée d'actionnement ou un capuchon auxiliaire (42) et une ouverture située au-dessus de la pièce supérieure de régulation (2) pour reprendre un capuchon de fermeture.

16. Vanne de régulation selon l'une des revendications précédentes, **caractérisée en ce que** l'élément à thermostat (10) est inséré dans un alésage aveugle (45) ménagé dans l'extrémité (11b) du piston de régulation (11) non tournée vers l'anneau (12) de siège de vanne, s'appuie d'une part contre un ressort (46) de dépassement de course inséré dans un puits de reprise (10, 45) du piston de régulation (11) et d'autre part par un poussoir rétractable et déployable (19) contre un contre-appui (20) qui repose dans une pièce moulée filetée supérieure (47) et peut être ajusté dans cette dernière pour le préréglage de la température de consigne en direction de l'axe longitudinal (23-23) de la garniture de vanne (9), en opposition à la force élastique d'un ressort de rappel (22) du piston de régulation (11) disposé dans la garniture de vanne et agissant en opposition à la force de réglage de l'élément à thermostat (10), tandis que pour bloquer la vanne de régulation (43), la pièce moulée filetée (47) peut être ajustée sur l'anneau (22) de siège de vanne en même temps que le piston de régulation (11) et l'élément à thermostat (10) qui y est placé, en opposition à la force élastique du ressort de rappel (22) du piston de régulation (11), dans la direction de l'axe longitudinal (23-23) de la garniture de vanne (9), jusqu'à ce qu'un anneau d'étanchéité (48) disposé dans une rainure annulaire (49) ménagée à l'extrémité supérieure (15a) du cône de régulation (15) qui s'enfonce dans l'anneau (12) du siège de vanne, et qui s'appuie sur un épaulement annulaire (50) ménagé à l'extrémité inférieure (11a) du piston de régulation (11), vienne se placer contre l'anneau (12) du siège de vanne, la course de réglage de l'élément à thermostat (11) étant reprise par le ressort (46) de dépassement de course après le blocage de la vanne (43).

17. Vanne de régulation selon la revendication 16, **caractérisée par** une tige filetée creuse (55) insérée concentriquement par rapport au contre-appui ajustable (20) dans la pièce moulée filetée (47), pour visser la pièce moulée filetée en même temps que le piston de régulation (11) et que le cône de régulation et de blocage (15) dans la direction de l'axe longitudinal (22, 23) de la garniture de vanne (9), pour la fermeture et l'ouverture de la vanne (43).

18. Vanne de régulation selon l'une des revendications précédentes, qui présente un boîtier de vanne (4) qui forme une entrée d'écoulement (5) et une sortie d'écoulement (6) qui communiquent l'une avec l'autre et entre lesquelles est située une ouverture de passage (13), et sur lequel est montée une garniture de vanne (9) qui présente un piston de régulation (11) ajusté par un élément à thermostat (10) pour étrangler l'écoulement qui traverse l'ouverture de passage (13), **caractérisée par** un élément de nettoyage (81) formé sur le tourillon de régulation et apte à être insérée dans l'ouverture de passage (13).

19. Vanne de régulation selon la revendication 18, **caractérisée en ce que** l'élément de nettoyage (81) comprend une partie cylindrique dont le diamètre est égal ou légèrement supérieur au diamètre intérieur de l'anneau (12) du siège de vanne.

20. Vanne de régulation selon les revendications 18 ou 19, **caractérisée en ce que** l'élément de nettoyage (81) est réalisé dans le même matériau qu'un élément d'étanchéité (80) prévu sur le tourillon de régulation (15) et apte à être placé sur l'anneau (12) du siège de vanne pour fermer hermétiquement l'ouverture de passage (13).

21. Vanne de régulation selon la revendication 20, **caractérisée en ce que** l'élément d'étanchéité (80) et l'élément de nettoyage (81) sont réalisés d'un seul tenant.

22. Vanne de régulation selon l'une des revendications précédentes, **caractérisée en ce que** l'élément de nettoyage (81) est formé d'un seul tenant sur le piston de régulation (11).

23. Vanne de régulation selon la revendication 22, **caractérisée en ce que** l'élément de nettoyage (81) est formé par usinage avec enlèvement de matière du piston de régulation (11) et est adapté à l'ouverture de passage (13).
